Europäisches Patentamt

European Patent Office

Office européen des brevets

(19)

(11) **EP 1 482 347 A1**

(12) **EUROPEAN PATENT APPLICATION**
published in accordance with Art. 158(3) EPC

(43) Date of publication:
   **01.12.2004 Bulletin 2004/49**

(51) Int Cl.$^7$: **G02B 26/06**, G02B 26/08, G02B 7/18

(21) Application number: **03737487.3**

(22) Date of filing: **04.02.2003**

(86) International application number:
   **PCT/JP2003/001139**

(87) International publication number:
   **WO 2003/067306 (14.08.2003 Gazette 2003/33)**

(84) Designated Contracting States:
   **AT BE BG CH CY CZ DE DK EE ES FI FR GB GR HU IE IT LI LU MC NL PT SE SI SK TR**

(30) Priority: **06.02.2002 JP 2002029623**

(71) Applicants:
   • **National Institute of Advanced Industrial Science and Technology**
      **Tokyo 100-8921 (JP)**
   • **Evolvable Systems Research Institute, Inc.**
      **Tokyo 101-0048 (JP)**

(72) Inventors:
   • **MURAKAWA, Masahiro,**
      **NAT. INST. ADV. IND. SCI.TEC.**
      **Ibaraki 305-8568 (JP)**

   • **ITATANI, Taro, NAT. INST. ADV. SCI. TEC.**
      **Ibaraki 305-8568 (JP)**
   • **HIGUCHI, Tetsuya, NAT. INST.ADV. TEC.**
      **Ibaraki305-8568 (JP)**
   • **YASUNAGA, Moritoshi**
      **Tsukuba-shi, Ibaraki 305-0051 (JP)**

(74) Representative: **Paget, Hugh Charles Edward et al**
      **Mewburn Ellis LLP**
      **York House**
      **23 Kingsway**
      **London WC2B 6HP (GB)**

(54) **VARIABLE-SHAPE MIRROR ADJUSTING METHOD, ADJUSTING APPARATUS, AND PROCESSING PROGRAM FOR PERFORMING THE ADJUSTING METHOD**

(57)   When amounts of change in shape of a plurality of deforming portions of the deformable mirror are adjusted, the deformable mirror including: a mirror surface in which the plurality of deforming portions are set and changes in shape of the deforming portions have influence on one another; and a plurality of deforming means for changing shapes of the plurality of deforming portions of the mirror surface respectively in response to control signals from the outside, and the deformable mirror changing a three-dimensional shape of the mirror surface in a segment-to-segment basis in a way that the deforming means change the shapes of the deforming portions of the mirror surface, reflected light, which has been outputted from a predetermined light source, and which has been reflected by the mirror surface, is detected at a predetermined position; the detected, reflected light is evaluated in accordance with a predetermined criteria; and the amounts of change in shape of the plurality of deforming portions are adjusted by supplying the control signals to the plurality of deforming means to optimize the reflected light by use of a genetic algorithm, based on a result of the evaluating of the reflected light. By this, amounts of operations of the plurality of deforming means which change shapes of the plurality of deforming portions of the mirror surface of the deformable mirror which have influence on one another can be automatically adjusted to optimize the reflected light in a short length of time without depending on a skilled person.

*FIG. 1*

**Description**

TECHNICAL FIELD

The present invention relates to an adjusting method of a deformable mirror, which optimizes a light collecting state of reflected light at the deformable mirror, a light collecting position thereof, and a wave front thereof. The present invention relates to an adjusting device thereof, and to a processing program for embodying the adjusting method.

BACKGROUND ART

When a laser beam is used for laser beam processing and lithography, a light collecting state of the laser beam and a wave front (a state of phase of light) thereof have influence on accuracy of finishing to a large extent. For this reason, in order to collect a laser beam to one point as much as possible, a practice of reflecting a laser beam by a mirror with a parabolic shape, which is a special shape, has heretofore been carried out. In addition, in order to make phases of a laser beam coherent, a method of enlarging a diameter of a beam of light by a beam expander and of using only central portion of the enlarged beam of light where the phases are made coherent has been implemented.

However, the method implemented by using a mirror with a special shape has made it difficult to manufacture a light collecting apparatus because of problems that the mirror is expensive and the mirror can not be procured in a stable manner. In addition, concerning a mirror with a special shape, the light collecting position can not be adjusted. When a light collecting position is aimed to be adjusted, the mirror has to be re-set manually whenever deemed necessary. Therefore, there has been a lack of flexibility in adjusting the mirror.

In addition, with regard to a method implemented by using of a beam expander, since a portion where phases of a beam of light are not made coherent can not be used, energy efficiency for finishing has been extremely bad.

Consequently, in order to solve the aforementioned problems of the conventional methods, a method of reflecting a beam of light by a deformable mirror, and of thus adjusting a light collecting state and a wave front have been proposed. The deformable mirror is a mirror in which the three-dimensional shape of the mirror surface can be changed in a segment-to-segment basis by control signals from the outside. The shape of the mirror can be changed in order to make a light collecting state of reflected light from the mirror and a wave front thereof ideal.

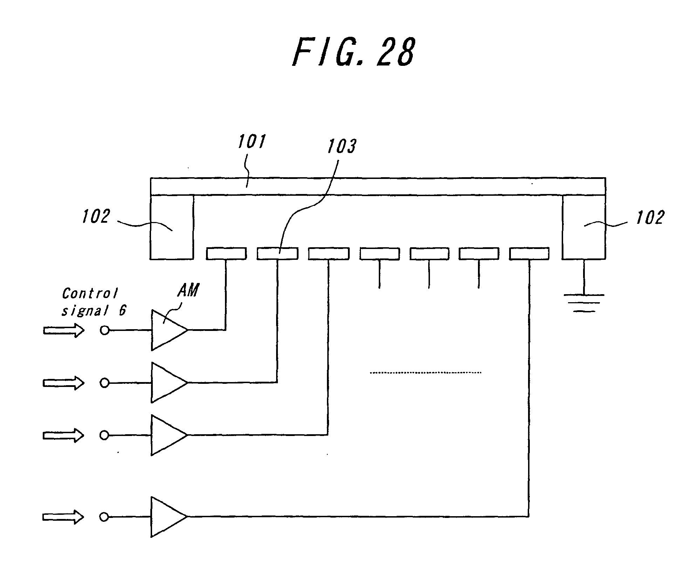

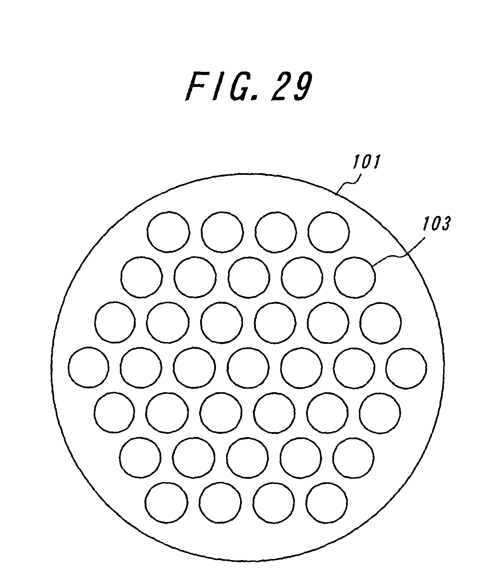

Figs. 28 and 29 show an example of a constitution of a deformable mirror. Fig. 28 is a cross-sectional view of the deformable mirror of the example. Fig. 29 is a rear view showing an electrode arrangement of the deformable mirror of the example.

In Fig. 28, reference numeral 101 denotes a mirror body which flexibly changes in response to a value shown by a control signal 6; 102, a supporting structure of the mirror; and 103, a plurality of electrodes as a plurality of deforming means. In addition, reference symbol AM denotes an amplifier for outputting voltage in response to a value from the control signal 6.

The mirror body 101 is constructed of a conductive substance, and conveniently has ground potential. The plurality of electrodes 103 are arranged opposite to the mirror body 101, close to the mirror body 101, and at an equal distance away from the mirror body 101. When a voltage is applied to such an electrode 103, a portion of the mirror body 101 which is close to the electrode 103 is attracted by an electrostatic attraction. Consequently, the portion of the mirror body 101 which is close to the electrode 103 changes in shape, and, by extension, a mirror surface of the portion changes in shape so that the three-dimensional shape of the mirror surface changes in a segment-to-segment basis.

Since there are a plurality of electrodes 103, portions of the mirror body 101 which are close to the respective electrodes 103 are attracted in response to voltages which are applied to the respective electrodes 103. In this point, degrees of freedom of change in the shape of the mirror body 101 is equal to the number of electrodes 103. The electrodes 103 are arranged, for example, as shown in Fig. 29. In an example of the constitution shown in the figure, the number of electrodes of one deformable mirror, the degrees of freedom of change in the shape of the mirror body 101 and the number of portions to be adjusted are 37 respectively.

In such a deformable mirror, an amount of change in the shape of a portion of the mirror body 101 which corresponds to an electrode 103 is influenced to a large extent by voltages of other electrodes 103 which are next to the electrode 103. For this reason, amounts of change in the shape of the mirror body in the respective portions to be adjusted are not independent of each other, but have influence on (are subordinated by) one another. Accordingly, an automated adjustment is very difficult, and a skilled person has been needed for the adjustment.

For example, let's assume that, in order to make a radius of a beam of light reflected by a deformable mirror as small as possible, an adjustment is made to a portion to be adjusted and then another adjustment is made to another portion to be adjusted. At this time, a result of the adjustment which has been made to the first portion to be adjusted is no longer optimal since the ensuing adjustment has been made. Accordingly, an adjustment has to be made once again. However, if an adjustment is made once again, a result of the ensuing adjustment is no longer optimal.

In addition, if a light collecting state, a light collecting position and a wave front are intended to be adjusted at the same time, since optimal three-dimensional shapes of the mirror surface of a deformable mirror are different from one another depending on the respective purposes, an overall adjustment which balances the purposes is needed. However, the balancing is difficult to be achieved manually. In some cases, even a skilled person does not achieve a sufficient adjustment result. In addition, an objective determination of whether or not an adjustment result is optimal can not be made.

Consequently, an adjustment of a deformable mirror has to be made in a way that simultaneous adjustments of a plurality of portions are made by balancing a plurality of purposes in order to cause the entire mirror surface to take up an optimal shape. For this reason, there has been a problem that an adjustment by a skilled person is needed and a time needed for the adjustment takes long. In addition, there has been a problem that costs for an adjustment is high since the adjustment needs a skilled person.

For this reason, with the aforementioned points taken into consideration, objects of the present invention are to provide an adjusting method for, and an adjusting device for, automatically adjusting a three-dimensional shape of the mirror surface of a deformable mirror in an optimal manner, and to provide an adjusting method for, and an adjusting device for, reconditioning deterioration in reflection states of the deformable mirror attributable to variation with time and the like. In addition, another object of the present invention is to provide a processing program for implementing the aforementioned adjusting method.

DISCLOSURE OF THE INVENTION

In order to achieve the aforementioned objects, an adjusting method of a deformable mirror of the present invention according to claim 1 is characterized in that, when amounts of change in shape of a plurality of deforming portions of the deformable mirror are adjusted, the deformable mirror including: a mirror surface in which the plurality of deforming portions are set and changes in shape of the deforming portions have influence on one another; and a plurality of deforming means for changing shapes of the plurality of deforming portions of the mirror surface respectively in response to control signals from the outside, and the deformable mirror changing a three-dimensional shape of the mirror surface in a segment-to-segment basis in a way that the deforming means change the shapes of the deforming portions of the mirror surface, reflected light, which has been outputted from a predetermined light source, and which has been reflected by the mirror surface, is detected at a predetermined position; the detected, reflected light is evaluated in accordance with a predetermined criteria; and the amounts of change in shape of the plurality of deforming portions is adjusted by supplying the control signals to the plurality of deforming means in order to optimize the reflected light by use of a genetic algorithm, based on a result of the evaluating of the reflected light.

According to such an adjusting method of a deformable mirror, when amounts of change in shape of a plurality of deforming portions of the deformable mirror are adjusted, the deformable mirror including: a mirror surface in which the plurality of deforming portions are set and changes in shape of the deforming portions have influence on one another; and a plurality of deforming means for changing shapes of the plurality of deforming portions of the mirror surface respectively in response to control signals from the outside, and the deformable mirror changing a three-dimensional shape of the mirror surface in a segment-to-segment basis in a way that the deforming means change the shapes of the deforming portions of the mirror surface, reflected light, which has been outputted from a predetermined light source, and which has been reflected by the mirror surface, is detected at a predetermined position; and the detected, reflected light detected is evaluated in accordance with a predetermined criteria. Sequentially, the amounts of change in shape of the plurality of deforming portions are adjusted by supplying the control signals to the plurality of deforming means in order to optimize the reflected light by use of a genetic algorithm which is an algorithm which is effective in optimizing a plurality of non-linear portions to be adjusted in a short time, based on a result of evaluating the reflected light. For this reason, operation amounts of the plurality of deforming means, which change the shapes of the plurality of deforming portions concerning a deformable mirror including a mirror surface in which changes in shape of the plurality of deforming portions have influence on one another, can be automatically adjusted in order to optimize the reflected light without depending on a skilled person in a relatively short time, and deterioration in a reflection state of the deformable mirror attributable to variation with time and the like can be reconditioned automatically.

It should be noted that, with regard to the adjusting method of a deformable mirror according to the present invention, as described in Claim 2, the evaluation in accordance with the predetermined criteria may be made by an evaluation function which is constituted of a weighted sum of a plurality of evaluation values of the detected, reflected light. If done so, the evaluation of the reflected light can be made adequately even if a requirements specification includes a plurality of conditions.

In addition, with regard to the adjusting method of a deformable mirror according to the present invention, as described in Claim 3, the evaluation in accordance with the predetermined criteria may be made by an evaluation function which is constituted by using a radius of distribution which is obtained when a power distribution of the reflected light is cut through at a predetermined power level, as an evaluation value of the detected, reflected light. If done so, the power distribution can be made unimodal by condensing the reflected light.

Furthermore, with regard to the adjusting method of a deformable mirror according to the present invention, as described in Claim 4, the evaluation in accordance with the predetermined criteria may be made by an evaluation function which is constituted by using a power variation in a power distribution of the reflected light as an evaluation value of the detected, reflected light. If done so, power of the reflected light can be made homogeneous in a predetermined range.

Moreover, with regard to the adjusting method of a deformable mirror according to the present invention, as described in Claim 5, the evaluation in accordance with the predetermined criteria may be made by an evaluation function which is constituted by using a minor axis of an ellipse which approximates a shape of a distribution which is obtained when a power distribution of the reflected light is cut through at a predetermined power level, as an evaluation value of the detected, reflected light. If done so, power of the reflected light can be approximated to a complete round while being made uniform in a predetermined range.

Additionally, with regard to the adjusting method of a deformable mirror according to the present invention, as described in Claim 7, reflected light which is reflected by the aforementioned mirror surface of the aforementioned deformable mirror and a parabolic mirror sequentially may be detected. If done so, it is beneficial when a beam of light is collected up to a diffraction limit.

In addition, with regard to the adjusting method of a deformable mirror according to the present invention, as described in Claim 8, reflected light which is reflected by the mirror surfaces of the plurality of deformable mirrors sequentially may be detected. If done so, it is beneficial when a wave front of a laser beam is corrected and the laser beam is made incident onto another optical instrument.

On the other hand, an adjusting device of a deformable mirror of the present invention according to Claim 9, which adjusts amounts of change in shape of a plurality of deforming portions in the deformable mirror, the deformable mirror including: a mirror surface in which the plurality of deforming portions are set and changes in shape of the deforming portions have influence on one another; and a plurality of deforming means for changing shapes of the plurality of deforming portions of the mirror surface respectively in response to control signals from the outside, and the deforming mirror changing a three-dimensional shape of the mirror surface in a segment-to-segment basis in a way that the deforming means change the shapes of the deforming portions of the mirror surface, the adjusting device comprises: reflected light detecting means for detecting reflected light which has been outputted from a predetermined light source, and which has been reflected by the mirror surface, at a predetermined position; reflected light evaluating means for evaluating the reflected light detected in accordance with predetermined criteria; and control signal outputting means for supplying control signals to the plurality of deforming means in order to optimize the reflected light by use of a genetic algorithm, based on a result of the evaluating of the reflected light.

Such an adjusting device of a deformable mirror, which adjusts amounts of change in shape of a plurality of deforming portions in the deformable mirror, the deformable mirror including: a mirror surface in which the plurality of deforming portions are set and changes in shape of the deforming portions have influence on one another; and a plurality of deforming means for changing shapes of the plurality of deforming portions of the mirror surface respectively in response to control signals from the outside, and the deforming mirror changing a three-dimensional shape of the mirror surface in a segment-to-segment basis in a way that the deforming means change the shapes of the deforming portions of the mirror surface, reflected light detecting means detects reflected light, which has been outputted from a predetermined light source, and which has been reflected by the mirror surface, at a predetermined position; reflected light evaluating means evaluates the reflected light detected in accordance with predetermined criteria; and control signal outputting means supplies control signals to the plurality of deforming means in order to optimize the reflected light by use of a genetic algorithm, base on a result of the evaluating of the reflected light.

Specifically, a genetic algorithm is one of probabilistic heuristic approaches. A genetic algorithm is an algorithm, (1) which functions effectively in global search, (2) which needs no derivative information such as a differential value and the like except for an evaluation function F, and (3) which has an easy implementation. For this reason, the present invention uses a genetic algorithm to change a value of a control signal of the deformable mirror by the adjusting device.

Consequently, according to the adjusting device of the present invention, operation amounts of the plurality of deforming means, which changes the shapes of the plurality of deforming portions in the deformable mirror which includes a mirror surface in which changes in shape of the plurality of the deforming portions have influence on one another, can be automatically adjusted so as to optimize the reflected light without depending on a skilled person in a relatively short time, and deterioration in reflection states of the deformable mirror attributable to variation with time and the like can be reconditioned automatically.

It should be noted that, with regard to the adjusting device of a deformable mirror according to the present invention, as described in Claim 11, the reflected light detecting means may detect reflected light which is reflected by the aforementioned mirror surface of the aforementioned deformable mirror and a parabolic mirror sequentially. If done so, it is beneficial when a beam of light is collected up to a diffraction limit.

In addition, with regard to the adjusting device of a deformable mirror according to the present invention, as described in Claim 12, the reflected light detecting means may detect reflected light which is reflected by the mirror surfaces of a multiplicity of the aforementioned deformable mirrors sequentially may be detected. If done so, it is beneficial when a wave front of a laser is corrected and the laser beam is made incident onto another optical instrument.

Furthermore, a processing program of the present invention according to Claim 13 for embodying the adjusting method of the deformable mirror according to one of Claims 1 to 5 is characterized in that a computer is caused to implement: a step of evaluating the reflected light detected in accordance with the predetermined criteria; and a step of adjusting amounts of change in shape of the plurality of deforming portions by providing control signals to the plurality of deforming means in way that the reflected light is optimized, based on a result of evaluating the reflected light, by use of a genetic algorithm.

According to such a processing program for embodying the adjusting method of the deformable mirror, a computer can be caused to implement: a step of evaluating the detected, reflected light in accordance with the predetermined criteria; and a step of adjusting amounts of change in shape of the plurality of deforming portions by providing control signals to the plurality of deforming means in order to optimize the reflected light, based on a result of evaluating the reflected light, by use of a genetic algorithm. For this reason, concerning a deformable mirror which includes a mirror surface in which changes in shape of the plurality of deforming portions have influence on one another, operation amounts of the plurality of deforming means, which cause the plurality of deforming portions to change in shape, can be automatically adjusted so as to optimize the reflected light without depending on a skilled person in a relatively short time, and deterioration in reflection states of the deformable mirror attributable to variation with time and the like can be reconditioned automatically.

Moreover, according to the aforementioned adjusting method of, and adjusting device of, a deformable mirror as well as the processing program for embodying the adjusting method, as described in Claims 6, 10 and 14, simulated annealing may be used instead of a genetic algorithm. If done so, even when the number of local optimal solutions is large, the processing can be performed within a shorter time whereas performance after the adjustment is lowered, compared to the case that a genetic algorithm is used.

BRIEF DESCRIPTION OF THE DRAWINGS

Fig. 1 is a schematic view showing a constitution of an adjusting device of a deformable mirror according to a first embodiment of the present invention.

Fig. 2 is a schematic view showing an example of a constitution of a control unit in the adjusting device according to the aforementioned embodiment.

Fig. 3 is a flowchart showing an outline of a processing procedure of the adjusting method according to the first embodiment of the present invention.

Fig. 4 is a flowchart showing an outline of a procedure of a general genetic algorithm.

Fig. 5 is a diagram to illustrate chromosome which is used for a genetic algorithm.

Fig. 6 is a diagram showing chromosome, which is used for a genetic algorithm in the method according to the embodiment, and register values and values of adjustment signals which are determined by the genetic algorithm.

Fig. 7 is a flowchart showing a procedure of a crossover process to be implemented in the genetic algorithm in the method according to the embodiment.

Fig. 8 is a diagram showing an operation which is carried out in a case that two adjustment signals of the crossover process are present.

Fig. 9 is a flowchart showing a procedure of a mutation process which is implemented in the genetic algorithm in the method according to the embodiment.

Fig. 10 is a flowchart showing a procedure of a replacement process which is implemented in the genetic algorithm in the method according to the embodiment.

Fig. 11 is a flowchart to more specifically show a procedure of a process for which the genetic algorithm in the method according to the embodiment is adapted.

Fig. 12 is a diagram showing a method of evaluating an incident state of reflected light in the method according to the embodiment.

Fig. 13 is a diagram to illustrate a cross-section of a power distribution of reflected light taken along a Y-plane.

Fig. 14 is an experimental result of a power distribution of reflected light which is obtained after a rough adjustment made manually according to the embodiment.

Fig. 15 is an experimental result of a power distribution of reflected light which is obtained after an adjustment is made by the genetic algorithm according to the embodiment.

Fig. 16 is a diagram showing a transit of values of an evaluation function which is in the process of adjustment by the genetic algorithm according to the embodiment.

Fig. 17 is a diagram showing a method of evaluating an incident state of reflected light in the adjusting method according to a second embodiment of the present invention.

Fig. 18 is a diagram showing a case that incident states of reflected light cease to be unimodal in the embodiment.

Fig. 19 is a diagram showing a method of evaluating incident states of reflected light to be taken when the incident states of the reflected light cease to be unimodal.

Fig. 20 is an experimental result of a power distribution of reflected light which is obtained after an adjustment is made by a genetic algorithm according to a method of the embodiment.

Fig. 21 is a diagram showing a transit of values of an evaluation function which is in the process of adjustment by the genetic algorithm according to the embodiment.

Fig. 22 is a diagram showing a method of evaluating an incident state of reflected light in the adjusting method according to a third embodiment of the present invention.

Fig. 23 is a schematic view showing a constitution of an adjusting device of a deformable mirror according to a second embodiment of the present invention.

Fig. 24 is a diagram to illustrate an adjustment result to be obtained when only a set of deformable mirror is used.

Fig. 25 is a diagram to illustrate an adjustment result to be obtained when two sets of deformable mirrors are used according to the present invention.

Fig. 26 is a schematic view showing a constitution of an adjusting device of a deformable mirror according to a third embodiment of the present invention.

Fig. 27 is a diagram to illustrate a method of forming an initial population to be taken when a readjustment is made in the adjusting method according to the present invention.

Fig. 28 is a cross-sectional view showing an example of a deformable mirror.

Fig. 29 is a rear view showing an example of an electrode arrangement of the deformable mirror.

Fig. 30 is a diagram showing a procedure of another example of a crossover process to be implemented in the genetic algorithm in the method according to the first embodiment.

Fig. 31 is a flowchart showing a procedure of the crossover process in the embodiment.

Fig. 32 is a diagram showing examples of lines, each of which divides a mirror surface into two sections, in the crossover process of the embodiment.

Fig. 33 is a diagram showing a method of evaluating an incident state of reflected light in an adjusting method according to a fourth embodiment of the present invention.

Fig. 34A is an experimental result (in the direction of a minor axis) of a power distribution of reflected light which is obtained after an adjustment is made by a genetic algorithm according to the embodiment.

Fig. 34B is an experimental result (in the direction of a major axis) of a power distribution of reflected light which is obtained after an adjustment is made by the genetic algorithm according to the embodiment.

Fig. 35 is a diagram showing a transit of values of an evaluation function which is in the process of adjustment by the genetic algorithm according to the embodiment.

BEST MODE FOR CARRYING OUT THE INVENTION

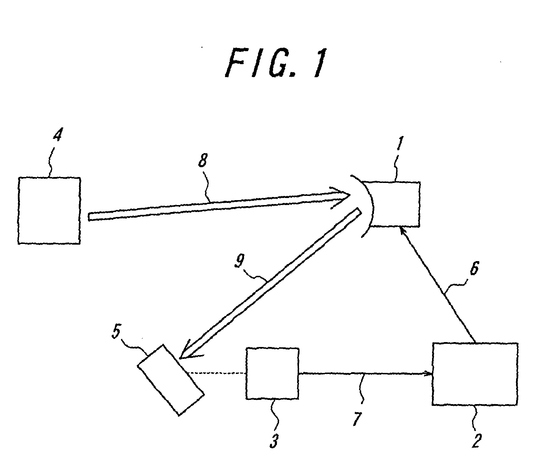

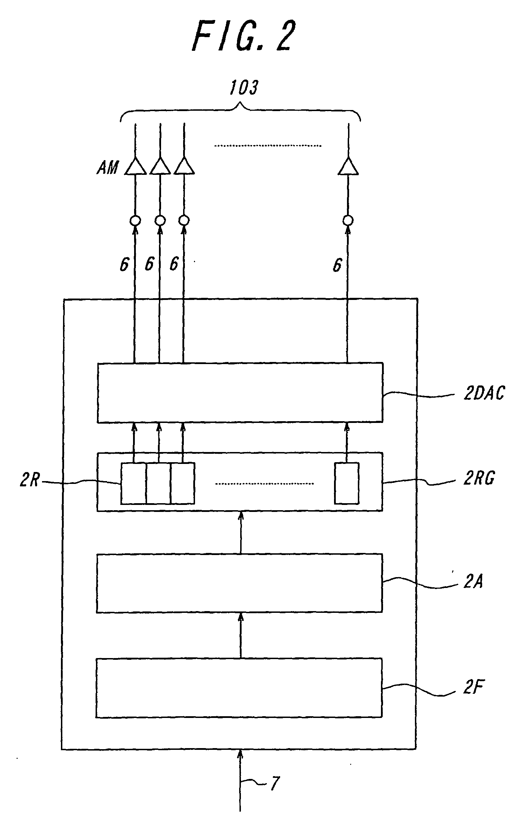

A detailed description will be provided for modes of the present invention by citing embodiments with reference to drawings below. Here, Fig. 1 is a schematic view showing a constitution of an adjusting device of a deformable mirror according to a first embodiment of the present invention. In the figure, reference numeral 1 denotes a deformable mirror which changes a three-dimensional shape of a mirror surface in a segment-to-segment basis in response to a value of a control signal (adjustment signal) ; and 2 a control unit, as a reflected light evaluating means and a control signal outputting means, for adjusting the deformable mirror 1 in accordance with an adjusting method according to the present invention. The control unit 2 instructs an amount of change in shape to each of a plurality of portions to be adjusted (37 portions in a case shown by Fig. 2) of the deformable mirror by use of a control signal 6. Reference numerals 8 and 9 respectively denote light (inputted light) which is inputted to the optical deformable mirror and light (reflected light) which is obtained by reflecting the inputted light 8 by the deformable mirror.

In addition, reference numeral 4 denotes a light source which outputs the incident light; and 5, a workpiece by the reflected light 9. Furthermore, reference numeral 3 denotes an observation unit, as a reflected light detecting means, for observing an incident state (a reflecting state) of the reflected light 9 which is directed to the workpiece, and the observation unit 3 conveys an observation result signal 7 to the control unit 2. In this case, the control unit 2 and the observation unit 3 are external units to the deformable mirror 1. The control unit 2 and the observation unit 3 may be separated units, or may be integrated.

The adjusting device according to the present embodiment causes a reflecting state of the reflected light 9 to satisfy a requirements specification by adjusting a shape of a mirror surface of a deformable mirror 1 to be adjusted after the deformable mirror 1 is setup. The requirements specification consists mainly of three items, i.e. peak power of the reflected light, an irradiating position of the reflected light and a distribution (wave front) of the reflected light. These three items are provided with the respective requirements specifications. In many cases, however, these three items are for the respective purposes which are contradictory to one another. Therefore, the adjustment has to be made by balancing the three items. In addition, in the deformable mirror, since an amount of change in shape of one portion to be adjusted has influence on an amount of change in shape of another portion to be adjusted, the adjustment has to be made in a way that all the portions to be adjusted are optimized at the same time.

For example, if each of 37 portions to be adjusted of the deformable mirror 1 shown in Figs. 28 and 29 is adjustable by 8 bits (256 steps), the number of all the adjustable combinations (adjustment search space) is expressed by the 296th (37x8) power of 2 ≒ the 89th power of 10, and a combinatorial explosion is caused. For this reason, the adjusting device according to the present embodiment which employs a genetic algorithm is extremely effective.

In the device according to the present embodiment, the deformable mirror is adjusted by the control unit 2 in order to satisfy the requirements specifications. An example of a constitution of the control unit 2 is shown in Fig. 2. In the figure, reference numeral 2R denotes a register for holding data; 2RG, a registers group comprising as many registers 2R as portions to be adjusted are present; and 2DA, a DA converter for converting a digital value held in the registers group 2RG to an analogue value. In addition, reference numeral 2A denotes an adjustment algorithm implementing unit, as a control signal outputting means, for implementing an adjustment procedure in accordance with an adjusting method according to an embodiment of the present invention which will be described later; 2F, an evaluation function calculating unit, as a reflected light evaluating means, for calculating an evaluation value of a reflecting state of the reflected light 9.

With regard to an adjustment in the device according to the present embodiment, voltage is applied to an electrode 103 in proportion to the control signal 6 (an analogue value) which corresponds to a digital value held in the register 2R. The register 2R outputs a held digital value to the DA converter 2DAC, and can have a held digital value changed by the adjustment algorithm implementing unit 2A in the control unit 2. Incidentally, the DC converter 2DA may be included in the deformable mirror 1, instead of in the control unit 2.

The adjustment algorithm implementing unit 2A searches for optimal values to be values held in the plurality of registers 2R. It should be noted that the control unit 2 can be configured by an electronic computer, such as a personal computer or a microcomputer, which comprises a readable recording medium and a read-out device of the recording medium.

With regard to the electronic computer, processing programs for implementing functions of the adjustment algorithm implementing unit 2A and the evaluation function calculating unit 2F are stored in a recording medium such as a hard disk, a ROM (a read only memory), a optical disk, a magneto-optical disk, a flexible disk, a magnetic disk, a flash memory, a memory which uses a ferroelectric, an MRAM which uses a magnetic body, or a semiconductor memory which includes a backup function. Incidentally, the processing programs for making the adjustment may be what is transmitted and delivered via networks.

The observation unit 3 observes and analyzes a reflecting state of reflected light 9 which is directed to a workpiece, converts the state to an electric signal, and hereafter delivers the electric signal to the control unit 2. As the observation unit 3, a combination of a CCD camera and a electronic computer may be used. The control unit 2 calculates an evaluation value indicating how ideal a reflecting state is by the evaluation function calculating unit 2F, and the evaluation value is delivered to the adjustment algorithm implementing unit 2A. The adjustment algorithm implementing unit 2A searches for an optimal adjustment result by a method according to the present embodiment, as described later.

Next, a description will be provided for an adjusting method according to the first embodiment of the present invention which is used by the adjusting device according to the embodiment shown in Fig. 1.

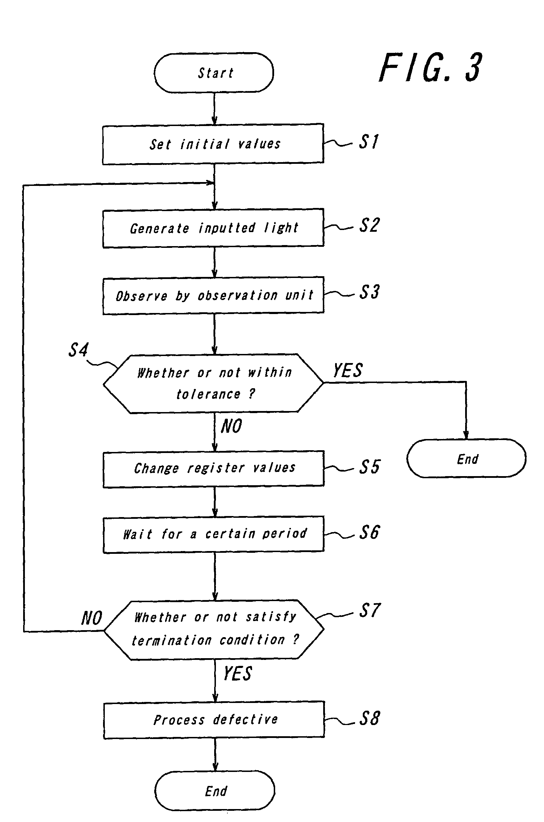

According to the method of the present embodiment, in an adjusting step, as shown in Fig. 1, a deformable mirror 1, a control 3 and a light source 4 are arranged respectively. The light source 4 makes inputted light 8 incident onto the deformable mirror 1, and the control unit 2 sets a register value of the registers group 2RG in accordance with a processing procedure shown in Fig. 3.

According to the processing procedure, first, in step S1, a position where the deformable mirror 1 is set up and a shape of the mirror are roughly adjusted in a manual manner, and reflected light 9 is made incident in the vicinity of a target position of the workpiece 5. At that time, a value of a control signal 6 which has been provided to the deformable mirror 1 is written, as an initial set value, to the register 2R, and the register 2R is caused to hold the value as a register value. In the next step S2, a light source 7 outputs inputted light 8. In the following step S3, the observation unit 3 observes an incident state of the reflected light 9 at the workpiece 5, and transmits an observation result to the control unit 2. In the ensuing step S4, the control unit 2 determines whether or not the incident state is within a tolerance which satisfies a predetermined specification, by use of the observation value which has come.

In this point, if the incident state is not within the tolerance, the control unit 2 changes the register values which the registers group 2RG has held in step S5, and the control unit 2 waits for a predetermined period until the shape of the deformable mirror 1 becomes stable in the ensuing step S6. In the next step S7, the control unit 2 determines whether or not a termination condition (described in detail later) is satisfied. If the termination condition is satisfied, the control unit 2 implements the processing of a defective workpiece, and terminates the processing. If the termination condition is not satisfied, the control unit 2 returns to step S2. Such a series of processing is implemented repeatedly. Then, in step S4, if it is judged that the incident state of the reflected light comes to satisfy the predetermined specification, the processing is terminated.

With regard to the aforementioned method of changing the register value from the initial set values, several methods may be used, and examples of the methods will be shown below. Specifically, a first method is a method of switching set values from one to another sequentially in appropriate order with regard to all the combinations within a range of assumed register values. A second method is a method of generating set values in a random-number-generating manner. A third method is a method of defining a result of a rough adjustment made manually as an initial set value, and changing set values from the set value in the + direction and in the - direction.

If the number of portions to be adjusted in the deformable mirror to be adjusted is small and a combinatorial explosion concerning register values does not occur, the first and second methods may be used. In the present embodiment, however, the number of portions to be adjusted is large (37 portions), and a combinatorial explosion occurs in an adjustment search space of element parameters to be adjusted. Accordingly, a third method is used. In this point, a method which is called a genetic algorithm is used. A description will be provided for an adjusting method which uses a genetic algorithm.

A bibliography concerning the genetic algorithm, for example, is Goldberg, David E. (1989). *Genetic Algorithms in Search, Optimization, and Machine Learning*. Addison-Wesley Publishing Company, Inc. Incidentally, what is called a genetic algorithm in the present invention is an evolutionary computational approach, and includes an evolution strategy (ES). A bibliography concerning the evolution strategy is Schwel, H.P. (1995). *Evolution and Optimum Seeking*. John Wiley & Son.

An incident state of the reflected light at the workpiece can be expressed by an evaluation function F in which adjustment signals to the deformable mirror 1 is defined as arguments. Making the incident state satisfy a predetermined specification is equivalent to finding adjustment signal values which optimize the evaluation function F. The present inventor has paid an attention to this point, and has discovered that the aforementioned genetic algorithm can be adapted for the adjusting of the deformable mirror. The control unit 2 changes register values of the registers group 2RG.

In a genetic algorithm, first, a population of virtual organisms which have genes is set up. The genetic algorithm causes individuals which adapt to a predetermined environment to survive depending degrees of their fitness values, and causes a probability that the individuals leave descendants to be increased. In addition, a procedure which is called a genetic operation causes genes of a parent to be passed on to a child. The genetic algorithm implements such alternation of generations, and causes a gene and a population of organisms to evolve. Through this, individuals which have a high fitness value come to make up a majority of the population of organisms. Furthermore, as the genetic operation at this time, a crossover, a mutation and the like which occur to reproduction of a real organism are used.

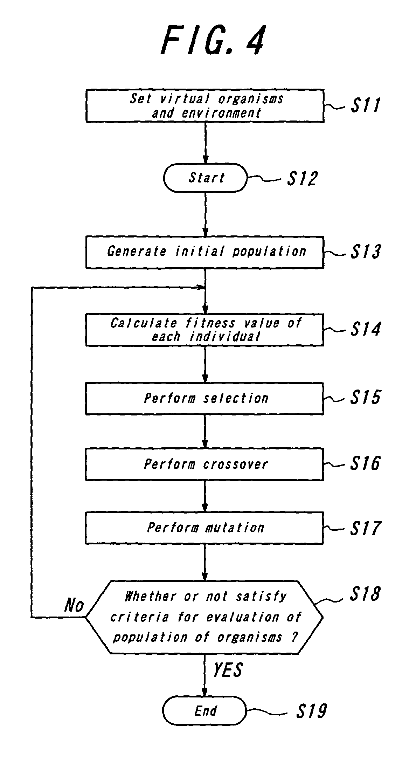

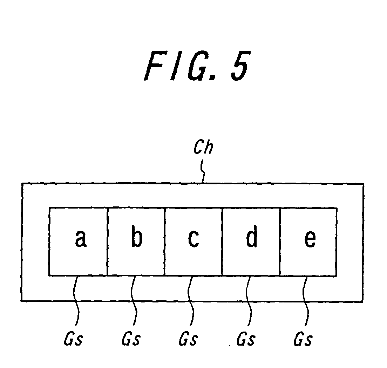

Fig. 4 is a flowchart showing a schematic procedure of such a genetic algorithm. Here, first, a chromosome of an individual is determined in step S11. In other words, what contents of data are passed on from a parent individual to an offspring individual in what format in the course of alternation of generations is determined. Fig. 5 illustrates a chromosome. Here, a variable vector x of an aimed optimization problem is expressed by a column of M symbols $A_i$ (i=1, 2, ⋯ M), and is assumed to be a chromosome consisting of M gene loci. Each symbol $A_i$ is a gene, and values which these symbols $A_i$ can take up are alleles. In Fig. 5, reference symbol Ch denotes a chromosome; and Gs, gene loci. The number M of the gene loci is 5. As an allele, a combination of integers, real numbers in a certain range, a column of mere symbols and the like are determined depending on a problem. In an example of Fig. 5, alphabets a to e are alleles. A set of genes symbolized in this way is a chromosome of an individual.

In the aforementioned step S11, then, a method of calculation for a fitness value indicating how much each individual adapts to an environment is determined. In this point, the method of calculation is designed in a way that, the larger or the smaller a variable makes a value of the evaluation function of the aimed optimization problem, the higher a fitness value of an individual corresponding to the variable becomes. In addition, in an alternation of generations performed later, the method of calculation is designed in a way that the higher fitness value an individual has, the higher probability of survival or the higher probability of producing an offspring the individual has in comparison with another individual which has a lower fitness value. By contrast, an individual which has a low fitness value is abolished, assuming that the individual is an individual which does not adapt to the environment well. This is a reflection of a principle of natural selection in the theory of evolution. In other words, a fitness value is a scale indicating how superior each individual is in terms of capability of survival.

In a genetic algorithm, when a search is started, generally speaking, an aimed problem is utterly a black box, and what individual is desirable is completely unknown. For this reason, usually, an initial population of organisms is generated randomly by use of random numbers. Accordingly, in a procedure employed here, in step 13 after a process is started in step S 12, the initial population of organisms is generated randomly by use of random numbers. Incidentally, if there is any background knowledge concerning the search space, processing such as generating a population of organisms with portions, whose evaluation values are assumed to be high, forming the nucleus of the population is performed in some cases. Here, the total number of individuals to be generated is referred to as a population size.

Next, in step S14, a fitness value of each individual in the population of organisms is calculated based on the method of calculation which has been determined in step S11. Once a fitness value is found for each individual, next, in step S15, an individual which is a base for an individual of the next generation is selected out of the population. However, if nothing but a selection is made, a ratio which individuals having the highest fitness values at the present time account for in the population of organisms merely becomes high, and accordingly a new search point does not occur. For this reason, undermentioned operations which are called a crossover and a mutation are carried out.

In other words, in the next step S16, two pairs of individuals are selected randomly at a predetermined frequency of occurrence out of individuals of the next generation which have been generated by the selection, and a chromosome of a child is produced by recombining chromosomes (crossover). Here, a probability that the crossover occurs is referred to as a crossover rate. An offspring individual which has been generated by the crossover is an individual to which a trait is passed on from each of the individuals which are the parents. By this crossover process, a diversity of chromosomes of an individual is increased, and evolution occurs.

After the crossover process is performed, in the ensuing step S17, a gene of an individual is mutated with a certain probability (mutation). Here, the probability that a mutation occurs is referred to as a mutation rate. A phenomenon that a content of a gene is rewritten with a low probability is a phenomenon observed in a gene of a real organism. However, it should be noted that, if the mutation rate is made too large, a genetic characteristic of the trait passed on from the parents by the crossover is lost and accordingly this leads to an equivalent to a random search in a search space.

By the above described processes, a population of the next generation has been determined. Next, in step S18, it is checked whether or not the population of organisms of the next generation which has been generated satisfies criteria for evaluation to terminate a search. The criteria for evaluation depend on a problem, and typical criteria are as follows.

The highest fitness value in the population of organisms comes to be larger than a certain threshold value.

An average fitness value of the entire population of organisms comes to be larger than a certain threshold value.

Generations whose increasing rates of a fitness value of the population of organisms is smaller than a certain threshold continue to appear for a certain period.

The number of alternations of generations reaches a predetermined number.

When any one of the aforementioned termination conditions (criteria for evaluation) is satisfied, step S19 is proceeded to, and the search is terminated. An individual whose fitness value is the highest in the population of organisms at that time is defined as a solution to the optimization problem to be found. If no termination condition is satisfied, a process of calculating a fitness value of each individual in step S14 is returned to, and the search is continued. By such a repetition of alternations of generations, the number of individuals in the population is kept constant, and concurrently a fitness value of each individual can be increased. Described above is an outline of a genetic algorithm.

A framework of the aforementioned genetic algorithm is so moderate that details of actual programming are not defined, and does not regulate a detailed algorithm corresponding to each problem. For this reason, in order to use a genetic algorithm for the adjusting method of a drformable mirror according to the present embodiment, the following items need to be achieved.

    (a) a method for expressing a chromosome
    (b) an evaluation function of an individual
    (c) a crossover method
    (d) a mutation method
    (e) a selection method
    (f) conditions for terminating a search

(a) A method for expressing a chromosome:

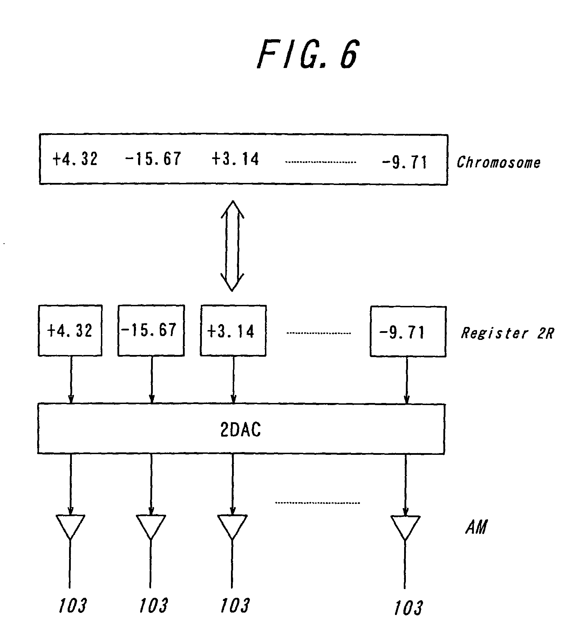

A main feature of the method according to the present embodiment is that a register value of the register 2R is directly used as a chromosome of the genetic algorithm. By this, processing and the like for converting information concerning a chromosome into a register value can be made unnecessary. This will be described specifically citing an example of Fig. 6.

In Fig. 6, the register 2R holds values such as +4.32, -15.67, +3.47, -9.71 and the like. A connection of these values in series is a chromosome. In this case, each gene in the chromosome takes up values of +4.32, -15.67, +3.47, -9.71 and the like. Since the values of the register 2R are transmitted as analogue values by the DA converter 2DAC to the amplifier AM in the deformable mirror 1, voltages are applied to the corresponding electrodes 103 so that the deformable mirror 1 changes in shape partially in response to the voltages. In other words, the values of the genes of the genetic algorithm correspond to the values of the voltages applied to the electrodes 103 in a one-to-one basis.

(b) An evaluation function of an individual:

As an evaluation function F of an individual of the genetic algorithm which is used in a process shown in Fig. 4, a function is used which indicates how close to an ideal state an incident state of reflected light 9 which has been observed by the observation unit 3 after the shape of the deformable mirror 1 is changed by register values which chromosomes of the genes express (details will be described later).

(c) A crossover method:

With regard to a crossover, in conventional genetic algorithms which treats discrete binary-coded numeric values, an operation for partially replacing genes of chromosomes is performed. However, a genotype space which is defined by binary numeral representation is different to a large extent from an adjustment signal space obtained after the binary-coded numeric values are converted into real numeric values in terms of the phase structure. For example, when a certain bit is inverted in the binary-coded number, influence on a parameter after the inversion differs depending on a position of the bit which is inverted. If a most significant bit is inverted, the parameter value changes to a large extent. However, if a least significant bit is inverted, the parameter value hardly changes.

For this reason, in conventional crossover methods for partially replacing genes, since continuity of the parameter space is not taken into consideration, a trait which a parent individual has acquired is not adequately passed on to a child individual. Accordingly, problems has occurred that an unnecessary search is repeated, or that a sufficient search is not carried out, and consequently an optimization has not been implemented in an efficient manner. In the present invention, therefore, a new crossover method is proposed where continuity of values of adjustment signals, i. e. values of voltages applied to the deformable mirror is taken into consideration.

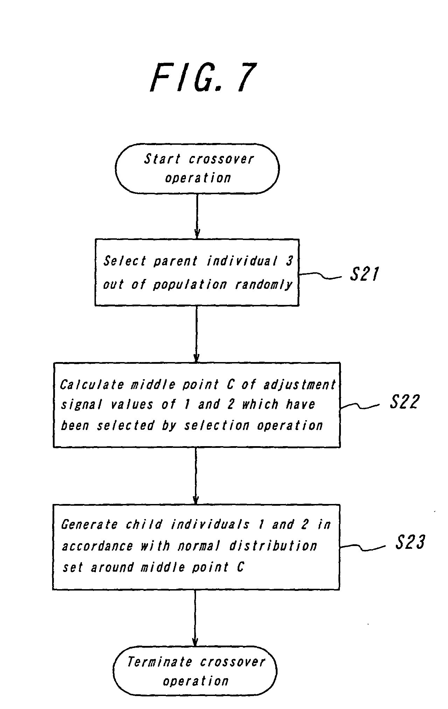

Fig. 7 shows a schematic flowchart of the crossover method according to the present embodiment. First, in step S21, a parent individual 3 is selected randomly out of the population. Next, in step S22, a middle point C of parent individuals 1 and 2 in the adjustment signal space which have been selected by the selection in step 15 of Fig. 4 is calculated. Then, in step 23, two child individuals are generated in accordance with a normal distribution probability set in the vicinity of the middle point C. Specifically, the child individuals are generated in accordance with the following equations (1) to (3).

$$x_k = x_c + \xi d + \sum_{i=1}^{n-1} \eta_i e_i D \quad \cdots (1)$$

$$x_c = (1/2)(x_1 + x_2) \qquad (2)$$

$$d = x_2 - x_1 \qquad (3)$$

Here, n is the number of portions to be adjusted (37 in a case of the deformable mirror 1 of Figs. 28 and 29); xk, coordinates in an adjustment signal space of child individuals; xc, a coordinate of the middle point C; d, a vector of a straight line (referred to as a "main axis") drawn between the parent individuals 1 and 2; and D, a distance between the main axis and the parent individual 3. In addition, $\xi$ is a random number subject to a normal distribution $N(0, \sigma\xi^2)$, and $\eta_i$ are (n-1) random numbers which are independently subject to a normal distribution $N(0, \sigma\eta^2)$ at the respective i. Furthermore, ei is one of orthonormal base vectors which span a subspace which is orthogonal to the main axis.

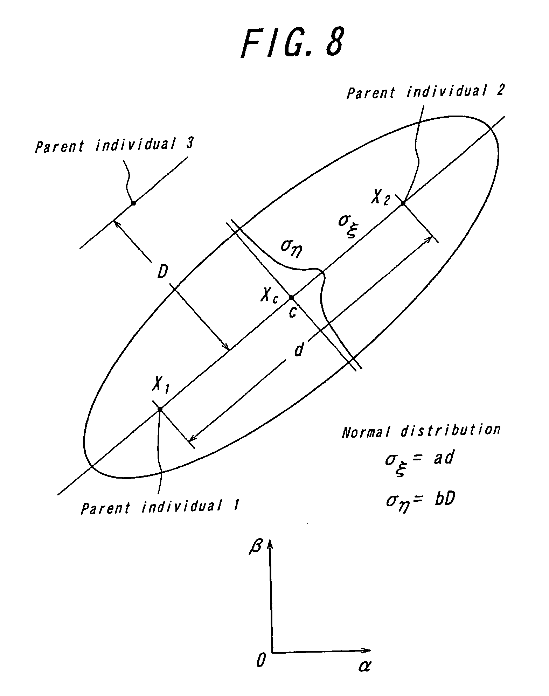

Here, as an example, a method for finding a standard deviation of the normal distribution probability in a case that two adjustment signals are present as $\alpha$ and $\beta$ is illustrated in Fig. 8. The standard deviation $\sigma\xi$ of the normal distribution in the direction of the main axis is set to be in proportion to a distance between the parents ($\sigma\xi = a|d|$), and a component $\sigma\eta$ of an axis orthogonal to the main axis is set to be in proposition to a distance between the main axis and the parent individual 3 ($\sigma\eta = bD$). Here, a and b are predetermined constant of proportionality.

By use of such a crossover method, continuity of values of the adjustment signals can be treated explicitly, and a search can be implemented without being influenced by a discretization method. For this reason, a global search can be implemented at an initial stage of the search when a distance between the parent individuals in the population is large, and a local search can be implemented at a final stage of the search when a distance between the parent individuals is small.

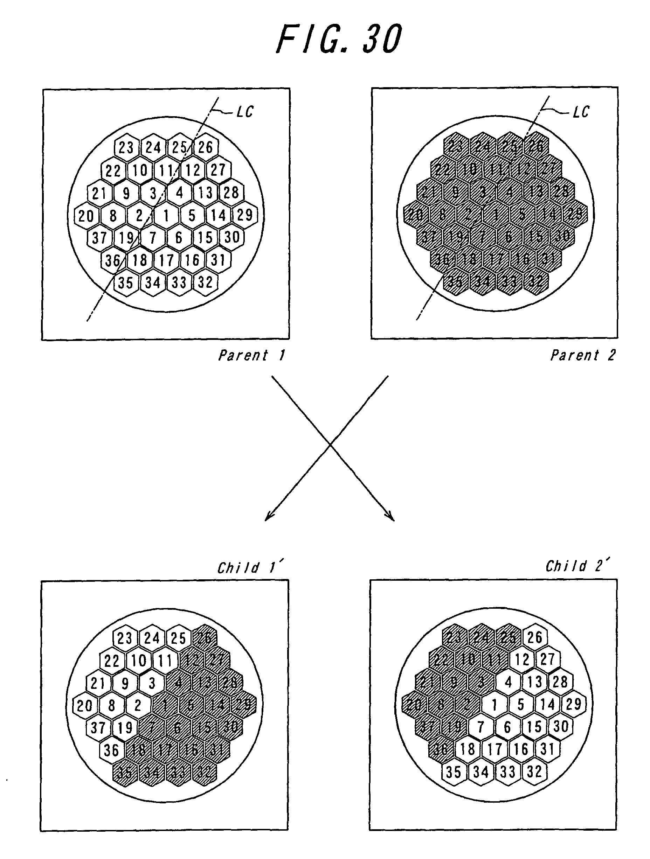

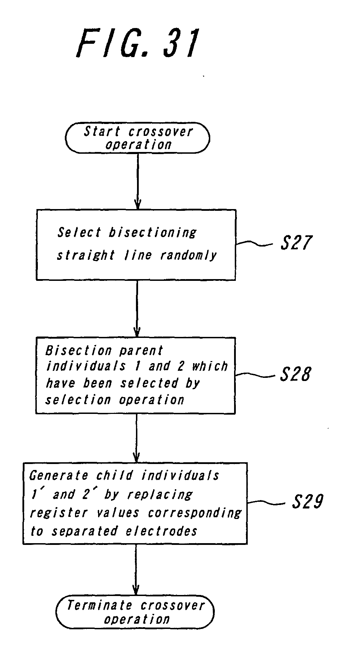

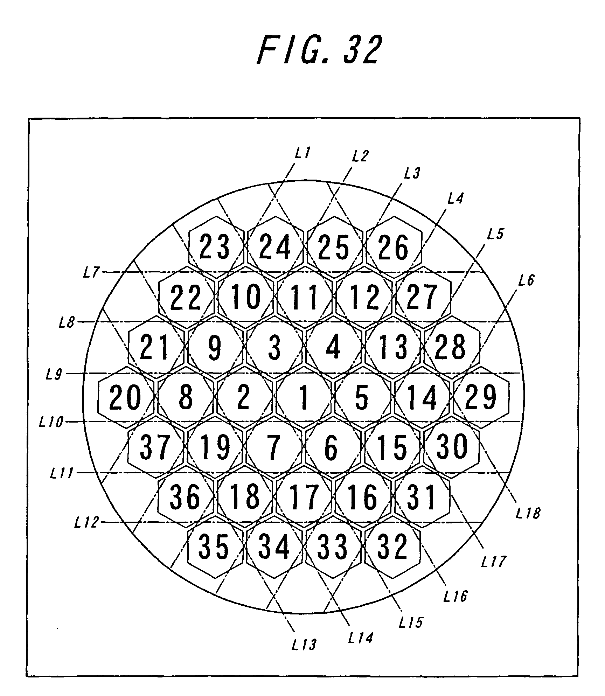

Similarly, as a method of treating continuity of values of the adjustment signals in a positive manner, a crossover method shown in Fig. 30 can be used. The crossover method shown in Fig. 30 is a method in which the mirror surface is divided into two sections by a straight line and register values corresponding to electrodes grouped are partially replaced. Fig. 30 shows an example that child individuals 1' and 2' are generated from parent individuals 1 and 2. The flowchart is shown by steps S27 to S29 of Fig. 31. Incidentally, in an example of Fig. 29, since the number of assumed bisectioning lines is 18 with straight lines L1 to L18 as shown in Fig. 32, a straight line may be selected randomly out of the lines.

(d) A mutation method:

With regard to a mutation method, in conventional genetic algorithms which treats discrete binary-coded numeric values, an operation for partially inverting genes of chromosomes is performed. However, since continuity of the adjustment signal values is not taken in consideration, a search can not be effectively performed. Therefore, according to the present embodiment, the mutation is an operation of adding normal random numbers which have been generated in accordance with a normal distribution $N(0, \sigma^2)$ to each gene of chromosomes of child individuals.

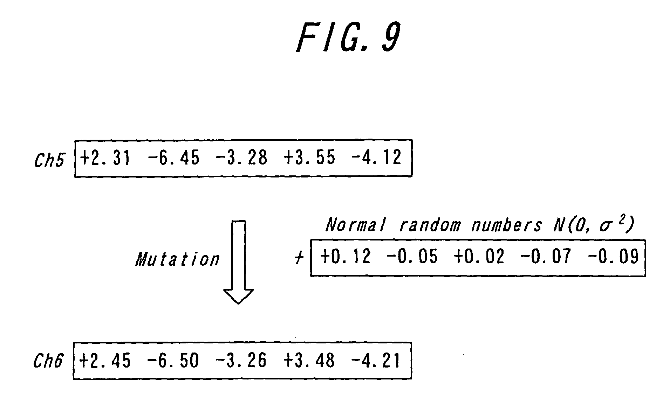

A description will be provided citing an example of chromosomes shown in Fig. 9. In a case that a chromosome Ch5 is

$$(+2.31 \ -6.45 \ -3.28 \ +3.55 \ -4.12),$$

when random numbers which is independently generated in accordance with a normal distribution for each gene is

$$(+0.12 \ -0.05 \ +0.02 \ -0.07 \ -0.09),$$

this is added to the chromosome Ch5, and the chromosome Ch6 is changed into

$$(+2.45 \ -6.50 \ -3.26 \ +3.48 \ -4.21).$$

If a standard deviation of the normal distribution is made too large, the search becomes an equivalent to a random search. For this reason, appropriate values need to be determined by a preliminary experiments. As random numbers to be added, other distributions such as the Cauchy distribution, other than the normal distribution, may be used.

(e) A selection method:

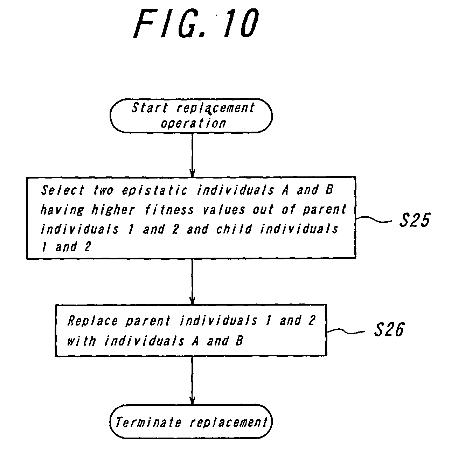

A selection in a genetic algorithm is a process for selecting individuals to be left for the following generations out of the population. According to the present embodiment, as shown by a process flow of Fig. 10, for example, two parent individuals 1 and 2 are selected randomly out of the population, and child individuals 1 and 2 are generated by subjecting these parent individuals 1 and 2 to a crossover and a mutation. Subsequently, out of the four individuals of the parent individuals 1 and 2 and the child individuals 1 and 2, two epistatic individuals A and B which have high fitness values are selected (step S25), and the parent individuals 1 and 2 in the population are replaced with the individuals A and B (step S26). A noticeable feature of this replacement process is that, unlike general genetic algorithms, all the individuals in the population are not changed simultaneously. This enables a search with a small number of individuals to be carried out.

(f) Conditions for terminating a search:

When a fitness value of an individual satisfies a predetermined condition, a search is terminated. Here, a search may be terminated when the highest fitness value in the population exceeds a predetermined threshold value, for example.

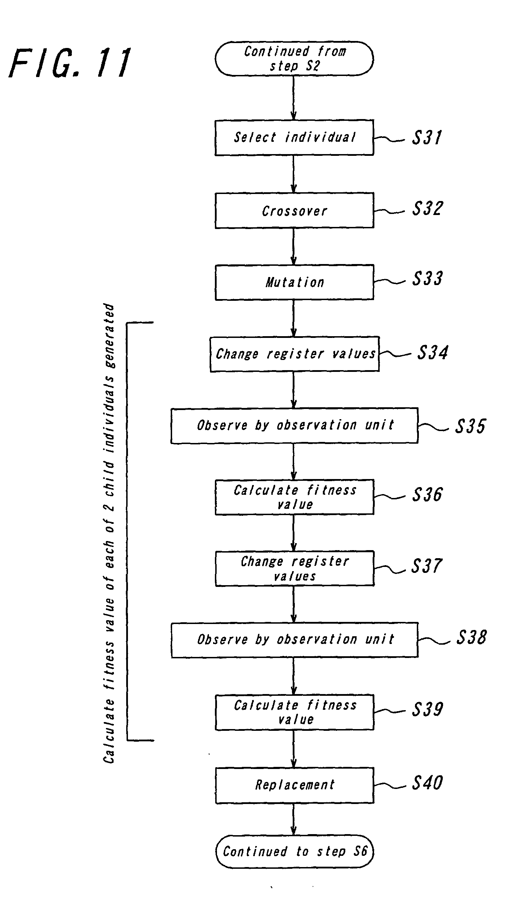

With reference to Fig. 11, a description will be provided for a process flow for determining a method for expressing a chromosome, a fitness value of an individual, a crossover method, a mutation method, a selection method and conditions for terminating a search as well as adjusting the deformable mirror 1 by use of a genetic algorithm.

Incidentally, the processes in Fig. 11 specifically show the processes in steps S3 to S5 of Fig. 3 in detail.

First of all, a plurality of individuals are generated, by use of uniform random numbers, as an initial population of the genetic algorithm in step S1 of Fig. 3, in order to use the plurality of individuals in steps shown in Fig. 11. This specifically means that a value of each gene of each chromosome in the initial population takes up a random real value between an upper limit value and a lower limit value. However, if there is any background knowledge concerning the most adequate amount of change in shape of the deformable mirror 1, an individual whose fitness value is supposed to be higher may be generated as the initial population. Subsequently, fitness values are calculated for the respective individuals in the initial population, and searches are sequentially carried out in accordance with the following procedure.

In a selection process of individuals in step S31, two parent individuals 1 and 2 are selected randomly out of the population by the adjustment algorithm implementing unit 2A, and are subjected to a genetic operation.

In a crossover process of step S32, as shown in Fig. 7, child individuals 1 and 2 are generated out of parent individuals 1 and 2 which have been selected by the selection and a parent individual 3 which has been selected randomly. Incidentally, this crossover process is allowed to occur with a probability Pcr (crossover rate).

In a mutation in step S33 which is implemented following the crossover in step S32, a process for adding normal random numbers, which have been generated in accordance with the Gaussian distribution $N (0, \sigma^2)$, to genes of chromosomes of the child individuals 1 and 2 is implemented, thereby changing genes. Incidentally, a probability that this mutation process occurs is denoted as Pmu, and is referred to as a "mutation rate."

After the mutation process in step S33 is completed, the acquired values (adjustment signal values) of chromosomes of the child individuals 1 and 2 are written to the registers group 5RG. Then, the DA converter 2DAC converts the register values into analogue values, and supplies the values as adjustment signals 6 to the deformable mirror 1. The deformable mirror 1 changes the shape of the mirror in response to the values of the adjustment signals 6. Based on an observation result transmitted from the observation unit 3, fitness values are calculated by use of the evaluation function by the evaluation function calculating unit 2F.

After the fitness values of the child individuals 1 and 2 are calculated in this manner, next in step S40, a replacement process of individuals is implemented in accordance with a processing procedure shown in Fig. 10. In other words, out of the four individuals of the parent individuals 1 and 2 and the child individuals 1 and 2, two epistatic individuals A and B which have high fitness values are selected, and subsequently the parent individuals 1 and 2 in the population are replaced with the individuals A and B.

Then, when it is determined in step S7 of Fig. 3 that an incident state of the reflected light 9 satisfies a predetermined specification, the adjustment process is completed. In a case that a chromosome (register values) which satisfies the specification can not be obtained even if the adjustment process is repeated for a certain number of generations, it is determined that the light source 4 or the deformable mirror 1 is a defective, and processing for the defective is implemented in step S8 of Fig. 3. It should be noted that, in a case, for example, that the predetermined specification includes an instruction that an evaluation value of light intensity of the reflected light 9 is required to increase or decrease as much as possible, a condition of whether or not the number of the generations exceeds a certain number is used as a condition for terminating the adjustment process in step S7, and thus the processing for the defective is not implemented.

The requirements specification for an incident state of the reflected light 9 is different from one another depending on a workpiece. An example is as follows.

(1) An incident position is within 100 μm of the center position of a work surface.
(2) A peak power of the reflected light is as large as possible.

Making an incident state satisfy the aforementioned specification is equivalent to finding a value of an adjustment signal which maximizes an evaluation function F expressed by the below mentioned equations (4) and (5) in which the adjustment signal 6 is an argument.

$$F = w1 / (R+1) + w2 \cdot Pm \qquad (4)$$

$$R = \sqrt{(XG \char`\^ 2 + YG \char`\^ 2)} \qquad (5)$$

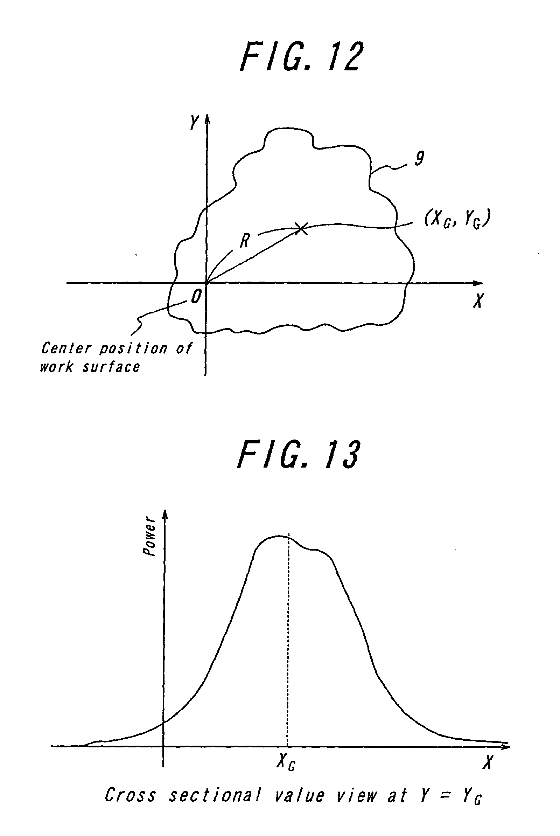

Here, F denotes a value of an evaluation function; w1 and w2, weighted coefficients; R which is used as an evaluation value, a distance of a center of an irradiation position of the reflected light 9 from a center position of a work surface; XG and YG, values of the horizontal and vertical coordinates of the center of the irradiation position of the reflected light 9 in the work surface; and Pm which is used as the other evaluation value, a peak value of power of the reflected light. When illustrated, these are shown in Figs. 12 and 13. XG and YG may be found as a center of gravity of a power distribution of the reflected light 9 in the work surface.

The aforementioned evaluation function F is determined in a way that the larger the peak power is, and the closer to the center the irradiation position is, the more ideal the incident state is. For example, assuming that a peak power of reflected light of the deformable mirror 1 which has been set by register values expressed by a chromosome is 6.8mW and an irradiation position falls just on the center, values of the evaluation function F are w1+6.8w2.

An upper limit value and a lower limit value of each register value depend on accuracy of a rough adjustment which has been made manually at a time of initialization, and are determined in response to values of applied voltages needed after the rough adjustment. With regard to the upper and lower limit values of the register value, as the adjustment by the control unit 2 goes on, the range between the upper and lower limit values may be narrowed. In addition, in a case that a register value to be found in the process of implementing the adjustment by the control unit 2 frequently becomes equal to the upper or lower limit values, the width between the lower and upper limit values may be enlarged even if in the process of making the adjustment.

Furthermore, as a result of the adjustment, in some cases, since the adjustment does not achieve a sufficient convergence, a particular register value is extremely large or small in comparison with register values of the adjacent portions to be adjusted.

In such cases, the particular register value may be replaced with an average value of the registers of the adjacent portions to be adjusted. As the adjacent portions to be adjusted, electrodes adjacent to an electrode corresponding to the particular register may be selected. In this case, for example in an electrode arrangement shown in Fig. 29, the number of the adjacent portions to be adjusted is 6. With regard to criteria for determining whether or not the particular register value is extremely large and whether or not the particular register value is extremely small, a case may be chosen that the particular register value does not fall within the range of (an average value of register values of the adjacent portions to be adjusted) $\pm$ 3 $\times$ (a standard deviation value). According to the operation for correcting the register value, sufficient performance can be achieved in some cases, even if the adjustment is terminated within a short period of time.

An experiment result obtained when the adjusting method which uses the genetic algorithm according to the present embodiment is adapted will be shown below. In this experiment, a He-Ne gas laser (633nm, power output 10 mw) was used as the light source 4; a mirror with a diameter of 15mm and 37 portions to be adjusted manufactured by Flexible Optical Co. Ltd., the deformable mirror 1; and BeamMaster BM7 manufactured by Coherent Co. Ltd., the observation unit 3. In this experiment, the number of individuals in the population is 30, and the number of generations by which the repetition is terminated is 35. A crossover method is a method shown in Fig. 7.

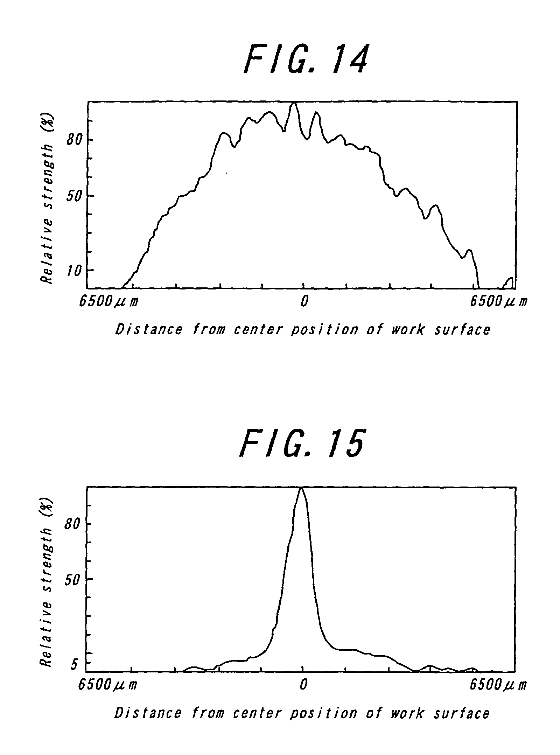

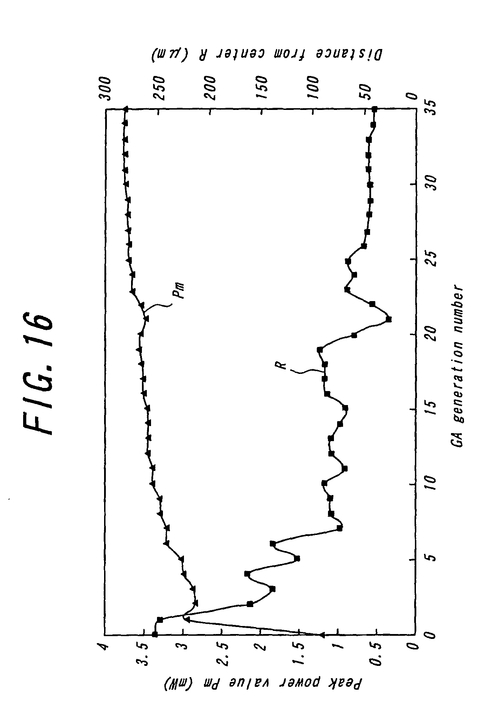

As a result of the aforementioned experiment, a rough adjustment made manually was not able to cause the reflected light 9 to satisfy the specification in terms of a power distribution as shown in Fig. 14. On the contrary, when the deformable mirror 1 was adjusted by the method which uses the genetic algorithm according to the present embodiment, a power distribution as shown by Fig. 15 was obtained, and accordingly the aforementioned specification was able to be satisfied. Fig. 16 shows relations between an evaluation function value of the best fitted individual in a generation in the process of the experiment and the generation. It is proved that, as generation of the genetic algorithm proceed to the next generation, the distance R from the center and the value Pm of peak powers are improved. According to conventional technologies, it takes longer than a day, or such performance can not be achieved eventually, even if a skilled person makes the adjustment. According to the present embodiment, however, a result which is far better than before was obtained automatically in a short time (approximately 30 minutes in this experiment). Consequently, the effectiveness of the adjusting method according to the present embodiment was confirmed by this experiment.

As described above, according to the method of the present embodiment, in order to cause an incident state of the reflected light 9 to satisfy the specification, the evaluation function F expressed by the equations (4) and (5) is set, and adjustment signals to the deformable mirror 1 are optimized. For this reason, the deformable mirror 1 can be automatically adjusted without a manual adjustment by a skilled person. This means that a performance can be obtained, which is higher than is obtained by conventional technologies, with less labor than conventional technologies need. In addition, the automated adjustment can be made although the interdependence among the portions to be adjusted in the deformable mirror 1 is present. Accordingly, since the deformable mirror need not be designed or manufactured in a way that the interdependence among the portions to be adjusted in the deformable mirror is eliminated as much as possible, an additional effect that costs for manufacturing a deformable mirror 1 can be reduced is brought about.

Next, a description will be provided for an adjusting method according to a second embodiment of the present invention. Depending on kinds of workpieces, a requirements specification for the incident state of the reflected light 9 includes the followings, for example.

(1) An incident position is within 100 μm of the center position of the work surface.
(2) A radius of the reflected light is as small as possible.

Making an incident state satisfy the aforementioned requirements specification is equivalent to finding a value of an adjustment signal which minimizes an evaluation function F expressed by the below mentioned equations (6) and (7) in which the adjustment signal 6 is an argument.

$$F = w1 \cdot R + w2 \cdot r \tag{6}$$

$$R = \sqrt{(XG ^\wedge 2 + YG ^\wedge 2)} \tag{7}$$

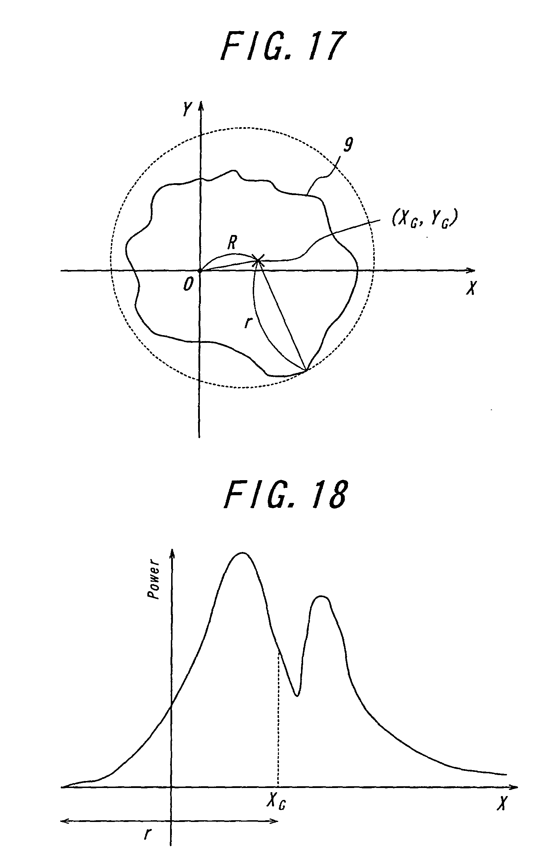

Here, r which is used as an evaluation value is a radius of the reflected light 9 on the work surface. When illustrated, this is shown in Fig. 17. r may be found as a distance from the center of gravity to a point which is the farthest away from the center of gravity out of points at which power of the reflected light exceeds predetermined values in the work surface.

The aforementioned evaluation function F is determined in a way that the smaller the radius r is, and the closer to the center the incident position is, the more ideal the incident state is. For example, assuming that a radius of the reflected light of the deformable mirror 1 which has been set by a register value expressed by a chromosome is 9.8 μm and the irradiation position falls just on the center, a value of the evaluation function F is 9.8w2.

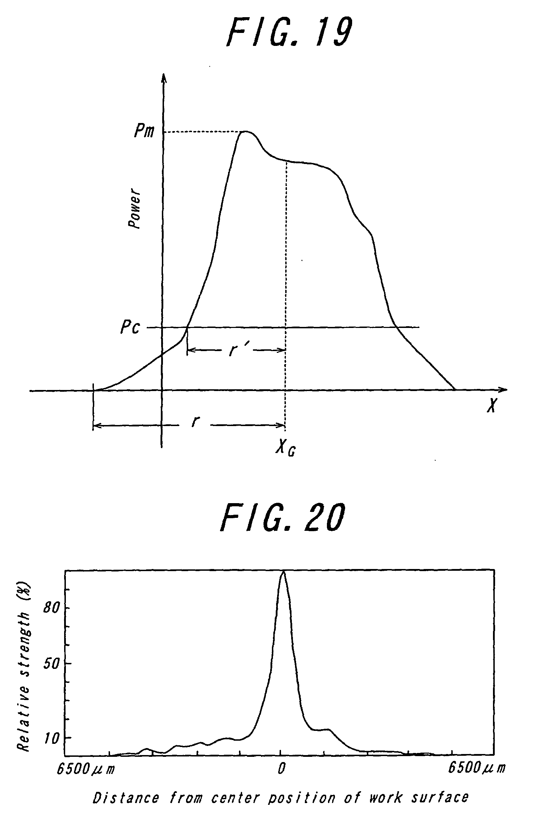

When an adjusting method which uses a genetic algorithm is adapted by use of the evaluation function F expressed by the aforementioned equations (6) and (7), in some cases, a power distribution ceases to be unimodal so that the power distribution becomes unsuitable for laser beam machining. In such cases, instead of a radius r, a radius r' shown in Fig. 19 may be used as an evaluation value.

The radius r' shown in Fig. 19 is a radius of a distribution area on the plane which is obtained by cutting through the power distribution at a level of power Pc. If Pc = $\alpha$ Pm ($0 \leq \alpha \leq 1$), r' = r in case of $\alpha$=0, and r'=0 in case of $\alpha$=1. As a result of the experiments, when $\alpha$ was caused to be in the order of 0.1 to 0.3, the power distribution becomes unimodal so that a satisfactory result was obtained. If $\alpha$ is made too large, r' is adjusted so that r' becomes small, and accordingly the power distribution becomes unimodal. This time, however, r becomes large, and it consequently brings about a problem that Pm becomes small.

An experiment on an adjustment was carried out by use of a genetic algorithm in order to minimize the evaluation function F expressed by the aforementioned equations (6) and (7) by using the aforementioned r' instead of r. Conditions for this experiment were the same as those of the previously mentioned experiment, except for the evaluation function F. A result of the experiment was as follows. When a rough adjustment was made manually, reflected light 9 exhibited a power distribution as shown in Fig. 14, and accordingly the reflected light was not able to satisfy the specification. By contrast, when the deformable mirror 1 was adjusted by use of the method according to the aforementioned embodiment which used the genetic algorithm, a power distribution as shown in Fig. 20 was obtained, and accordingly the specification was able to be satisfied.

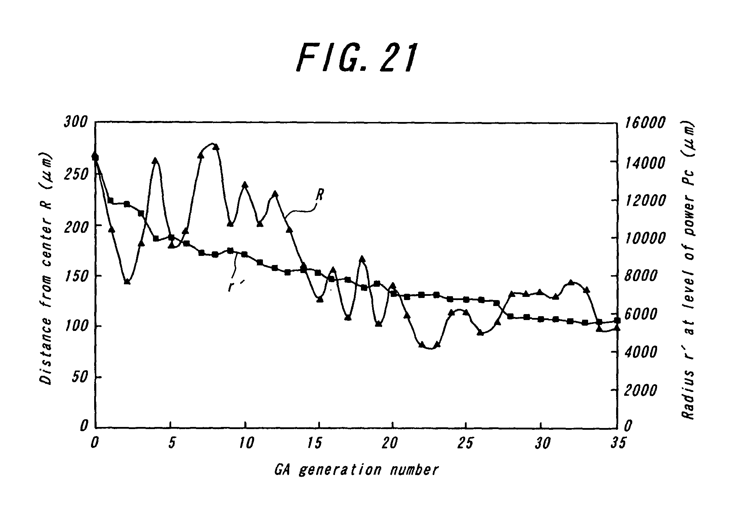

Fig. 21 shows relations between an evaluation function value F of the best fitted individual in a generation in the process of carrying out the experiment and the generation. It is proved that, as generation of the genetic algorithm proceed to the next generation, the evaluation function value decreases and the distance R from the center and the radius r' become smaller. According to conventional technologies, it takes longer than a day, or such performance can not be achieved eventually, even if a skilled person makes the adjustment. According to the present embodiment, however, a result which is far better than before was obtained automatically in a short time (approximately 30 minutes in this experiment). Consequently, the effectiveness of the adjusting method according to the present embodiment was confirmed by this experiment.

Next, a description will be provided for an adjusting method according to a third embodiment of the present invention. With regard to a laser beam to be used for lithography, in some cases, a requirements specification for the incident state of the reflected light 9 includes the followings, for example.

(1) An incident position is within 100 μm of the center position of the work surface.
(2) Power is as homogeneous as possible within a circle with a radius rc of the center of a incident position of the reflected light.

Making an incident state satisfy the aforementioned requirements specification is equivalent to finding a value of an adjustment signal which minimizes an evaluation function F expressed by the below mentioned equations (6) and (7) in which the adjustment signal 6 is an argument.

$$F = w1 \cdot R + w2 \cdot \tau \tag{8}$$

$$R = \sqrt{(XG \char94 2 + YG \char94 2)} \qquad (9)$$

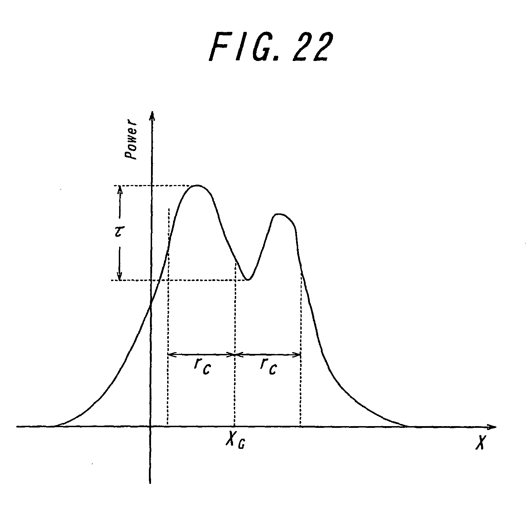

Here, $\tau$ which is used as an evaluation value is a difference (variation) between the maximum power value and the minimum power value within the circle with a radius rc of the center of the incident position of the reflected light. When illustrated, this is shown in Fig. 22.

The aforementioned evaluation function F is determined in a way that the smaller the power variation is, and the closer to the center the incident position is, the more ideal the incident state is. For example, assuming that a power variation of the reflected light of the deformable mirror 1 which has been set by register values expressed by a chromosome is 0.2mW and the irradiation position falls just on the center, a value of the evaluation function F is 0.2w2.

Next, a description will be provided for an adjusting method according to a fourth embodiment of the present invention. With regard to a laser beam to be used for laser beam machining, in some cases, a requirements specification for the incident state of the reflected light 9 includes the followings, for example.

(1) An incident state of the reflected light is as homogeneous as possible within a circle with a radius r'.
(2) The shape of an incident state of the reflected light is close to a complete round.

The radius r' is a value shown in Fig. 19. As a result of the experiments, when $\alpha$ was caused to be in the order of 0.8 to 0.9, the power distribution becomes completely round and homogeneous so that a satisfactory result was obtained. If $\alpha$ is caused to be too small, it brings about a problem that the homogeneousness can not be secured, although the roundness can be adjusted.

Making an incident state satisfies the aforementioned requirements specification is equivalent to finding a value of an adjustment signal which maximizes an evaluation function F expressed by the below mentioned equation (10) in which the adjustment signal 6 is an argument.

$$F = w1 \cdot rs \char94 2 \qquad (10)$$

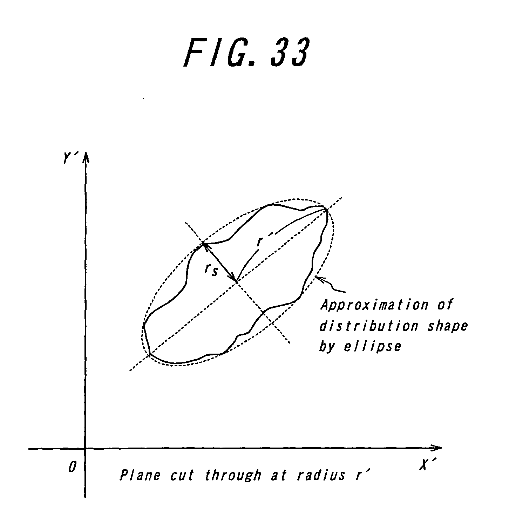

Here, rs which is used as an evaluation value is a minor axis of an ellipse which is approximated to a distribution area on the plane which is obtained by cutting through the power distribution at power Pc. When illustrated, this is shown in Fig. 33. For example, assuming that rs of the reflected light of the deformable mirror 1 which has been set by register values expressed by a chromosome is 5mm, a value of the evaluation function F is 25w1.

The aforementioned evaluation function F is determined in a way that the larger the minor axis of the ellipse is, the more ideal the incident state is. Even if only one of the minor and major axes of the ellipse becomes larger, a value of the evaluation function F does not become larger. For this reason, the adjustment is continued in a way that both the minor and major axes become larger. In addition, in accordance with the law of energy conservation, while a value of the radius becomes larger, a value of the peak becomes smaller. With this taken into consideration, an adjustment for causing the power distribution within the ellipse to become homogeneous is also continued. Through the effects mentioned above, an adjustment for obtaining a distribution shape, which is completely round, and which causes the power distribution to be homogeneous, can be made by this evaluation function.

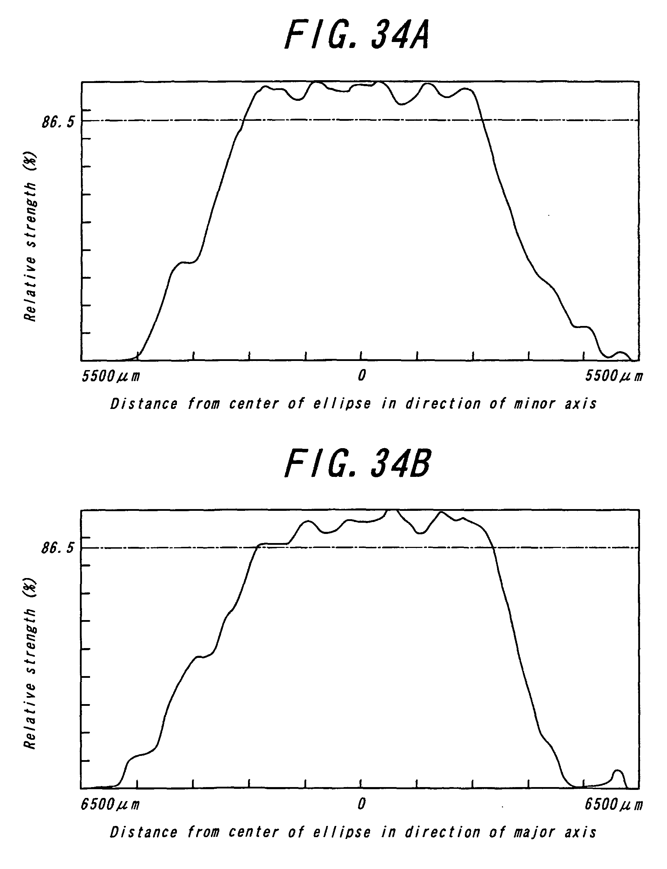

In order to maximize the aforementioned equation (10), an experiment on an adjustment was carried out by use of the genetic algorithm. Conditions for this experiment were the same as those of the previously mentioned experiment, except for the evaluation function F. A value of $\alpha$ which determines the radius r' was defined as 0.865. The result of the experiment was as follows. When the deformable mirror was adjusted by use of the method according to the aforementioned embodiment which used the genetic algorithm, power distributions as shown in Figs. 34A and 34B were obtained, and accordingly the specification was able to be satisfied.

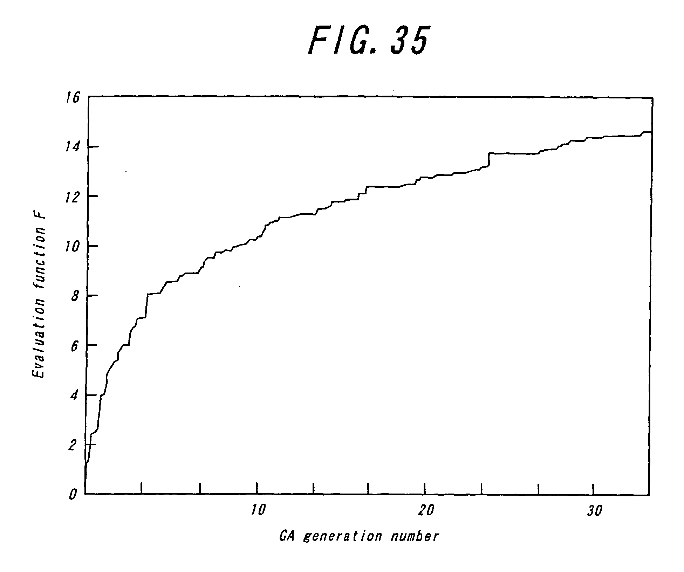

Fig. 35 shows relations between an evaluation function value F of the best fitted individual in a generation and the generation number, in the process of carrying out the experiment. From this figure, it is proved that, as generation of the genetic algorithm proceed to the next generation, the evaluation function value increases and a value of the minor axis of the ellipse becomes smaller. According to conventional technologies, it takes longer than a day, or such performance can not be achieved eventually, even if a skilled person makes the adjustment. According to the present invention, a result which is far better than before was able to be obtained automatically in a short time (approximately 30 minutes in this experiment). Consequently, the effectiveness of the adjusting method according to the present embodiment was confirmed by this experiment.

Next, as a second embodiment of the adjusting device according to the present invention, a case is shown that a high power laser beam is collected up to a diffraction limit or an equivalent by use of a deformable mirror and thus is used for atomic fusion and the like. In order to collect a laser beam up to a diffraction limit or an equivalent, a parabolic mirror and a deformable mirror may be combined, although the collecting of light virtually can not be done by a deformable mirror alone.

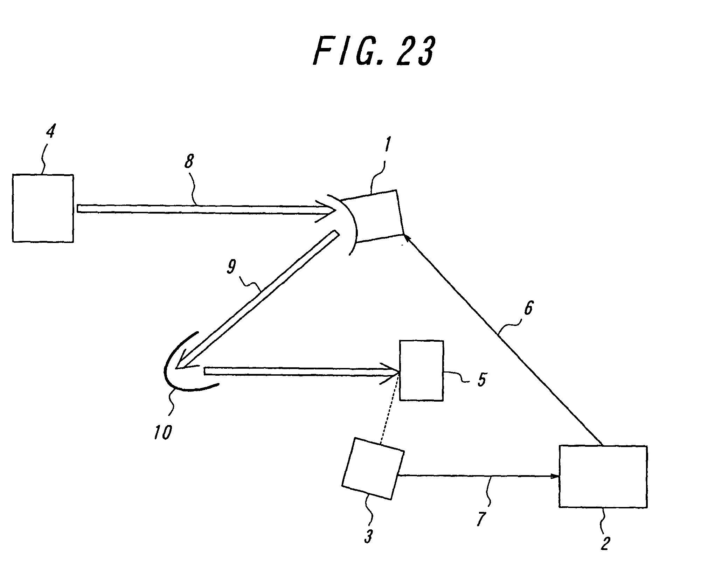

Fig. 23 shows a constitution of the adjusting device according to the second embodiment. Incidentally, components which are the same as, or similar to, the components used in Fig. 1 are denoted by the same reference numerals. Reference numeral 10 denotes a parabolic mirror. If light is not made incident in the right direction relative to the optical axis, light can not be collected at one point. Reference numeral 4 denotes a light source, and titansapphire femtosecond laser and the like may be used.

An adjusting method of the deformable mirror 1 in this case is the same as the adjusting method of the adjusting device according to the first embodiment. After the deformable mirror 1 and the parabolic mirror 10 are installed, in an adjusting step, a control unit 2, an observation unit 3 and the light source 4 are installed respectively. The light source 4 outputs inputted light 8 to the deformable mirror 1. The observation unit 3 supplies a light collecting radius and a light collecting position to the control unit 2, and the control unit 2 makes an evaluation by use of the evaluation function F of the aforementioned equations (6) and (7). In addition, the control unit 2 performs the setting of an adjustment signal of the deformable mirror 1 in accordance with a processing procedure similar to that shown in Fig. 3.

According to the adjusting device of the present embodiment, in order to make an incident state of the reflected light 9 satisfy a requirements specification, an evaluation function F shown by the equations (6) and (7) is set, and an adjustment signal to the deformable mirror is optimized. Consequently, without depending on a manual adjustment by a skilled person, the deformable mirror is automatically adjusted, and hereby a laser beam can be collected up to a diffraction limit or an equivalent. This means that performance which is higher than that achieved by conventional technologies can be achieved with labor which is less than that which the conventional technologies require. In addition, in a case that collected light is used for nuclear electric power generation and the like, in the environment where the mirror is installed, a manual adjustment is dangerous in many cases. In such cases, however, according to the present invention, an adjustment can be automatically made without sending persons for the adjustment, and accordingly this brings about another effect that a human body needs not to be exposed to a hazard.

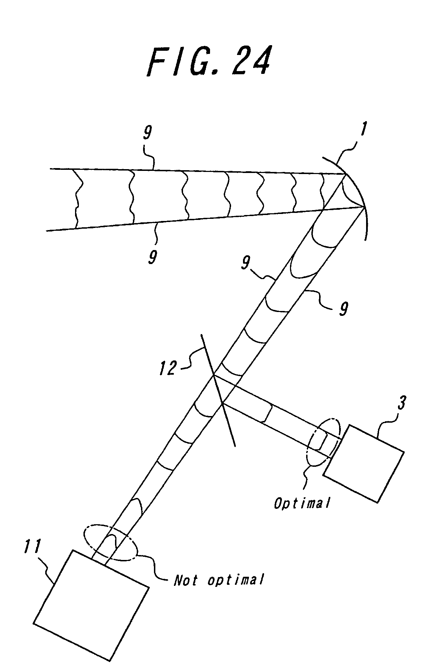

As a third embodiment of the adjusting device according to the present invention, a case is shown that a laser wave front is shaped by use of a deformable mirror and is transmitted to a different optical instrument. As optical instruments are there a spectroscope, an interferometer, a communication device using an optical fiber and the like. In a case that shaped light is intended to be transmitted to another optical instrument, the shaping of a wave front is insufficient as long as light is reflected by the deformable one time only. Consequently, the wave front needs to be shaped by reflecting the light by the deformable mirror twice. The reason for this is as follows. As shown in Fig. 24, in a case that reflected light after reflected by the deformable mirror once has been observed by the observation unit 3 and an adjustment has been made, the deformable mirror 1 is adjusted so that the mirror takes up an optimal shape at a time when the reflected light enters the observation unit. However, before the light is made incident onto another optical instrument 11, the wave front is out of shape and is no longer in the optimal state.

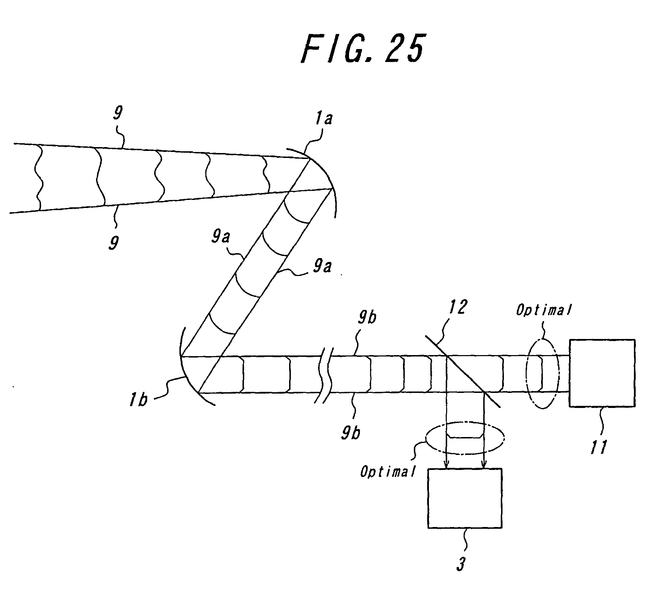

On the other hand, as shown in Fig. 25, two sets of deformable mirrors are used, and reflected light 9a, which has been once reflected by a deformable mirror 1a, is caused to be once again reflected by the other deformable mirror 1b. Subsequently, the reflected light 9b is observed at a point sufficiently distant away, and thus these deformable mirrors are adjusted. In this case, even if the reflected light 9b is made incident onto the different optical instrument 11, the wave front can maintain the optimal state.

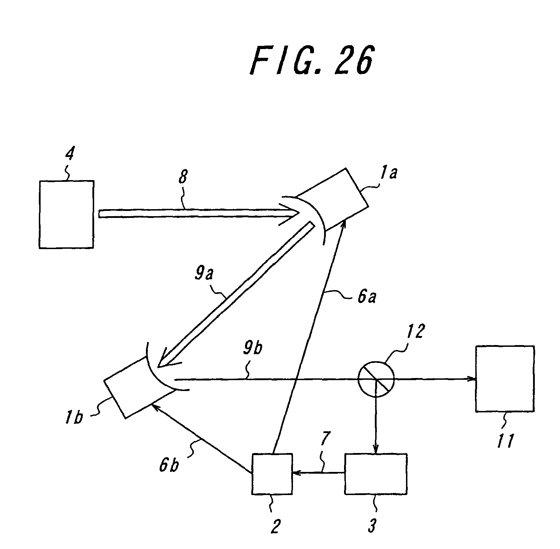

Fig. 26 shows a constitution of the adjusting device according to the third embodiment. Incidentally, components which are the same as, or similar to, the components used in Fig. 1 are denoted by the same reference numerals. An adjusting method of the two sets of deformable mirrors 1a and 1b in this case is basically the same as the adjusting method according to the first embodiment. After the deformable mirrors 1a and 1b are installed, in an adjusting step, a control unit 2, an observation unit 3 and a light source 4 are installed respectively. The light source 4 outputs inputted light 8 to the deformable mirror 1a. Reflected light 9a which is obtained by reflecting the inputted light 8 by the deformable mirror 1a is made incident onto the deformable mirror 1b. Reflected light 9b which is obtained by reflecting the reflected light 9a by the deformable mirror 1b is made incident onto another optical instrument 11, and concurrently is made incident onto the observation unit 3 by a half mirror 12. The observation unit 3 supplies a variation of the light and the light collecting position to the control unit 2, and the control unit 2 makes an evaluation by use of the evaluation function F of the aforementioned equations (6) and (7). In addition, the control unit 2 performs the setting of adjustment signals 6a and 6b of the respective deformable mirrors 1a and 1b in accordance with a processing procedure similar to that shown in Fig. 3.

According to the adjusting device of the present embodiment, in order to make an incident state, in which the reflected light 9b is made incident onto another optical instrument 11, satisfy a specification, an evaluation function F shown by the equations (6) and (7) is set, and adjustment signals to the respective deformable mirrors 1a and 1b are simultaneously optimized. Consequently, without depending on a manual adjustment by a skilled person, the deformable mirrors 1a and 1b are automatically adjusted, and thereby light whose wave front has been shaped can be made incident onto another optical instrument. This means that high performance can be achieved in the optical instrument 11 with labor which is less than that which the conventional technologies require. In addition, since devices for shaping a wave front and for adjusting an optical axis are not needed in the interior of the optical instrument 11, this brings about an additional effect that the optical instrument 11 can be simplified.

It should be noted that, in some cases, an optimal shape of the deformable mirror varies with time. As reasons for this, it is conceivable that a seated state of the deformable mirror varies owing to vibrations or the like, and that the deformable mirror absorbs light, although in a minute amount, and generates heat so that the deformable mirror changes in shape. For this reason, in some cases, a reconditioning at intervals of a certain period is needed. Each time the reconditioning is carried out, an adjustment takes time.

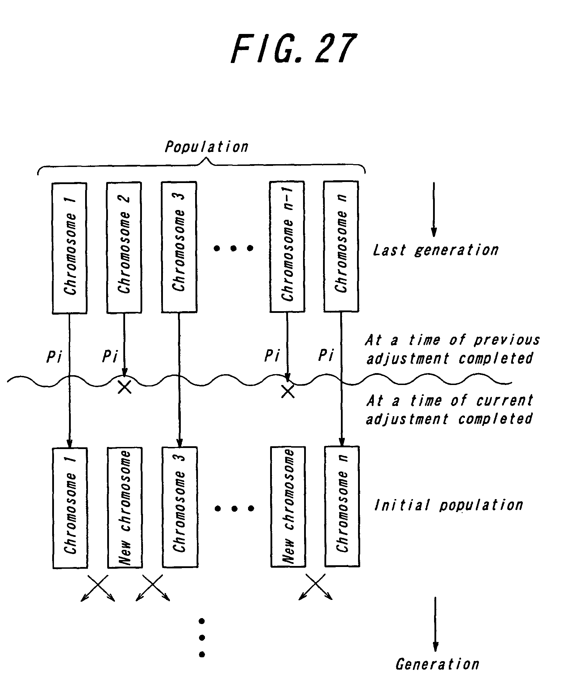

With this taken into consideration, as a method for shortening time needed for the adjustment, the present invention proposes a new method for generating an initial population in a genetic algorithm shown in Fig. 27. As described above, generally speaking, an initial population in a genetic algorithm is generated randomly. In the method, however, as an initial population, all the chromosome information of a population which occurred when a previous adjustment was completed is stored. Then, the information is used with a probability Pi, for a chromosome of a population to be generated when a readjustment is made. In other words, out of the initial population to be generated when the readjustment is made, (population size) x Pi of individuals are copies of individuals which are selected randomly out of a population which occurred when the previous adjustment was complete. The rest, i.e. (population size) x (1-Pi) of individuals are newly generated randomly.

When it is assumed that an optimal shape of the deformable mirror has hardly varied since the previous adjustment was completed, a value of Pi may be defined as being close to 1. In such a case, since adjustment information obtained when the previous adjustment was completed is passed on to the initial population, an adjustment can be made within the scope of a fine adjustment. For this reason, the readjustment can be completed in a very short period. In addition, when it is assumed that an optimal shape of the deformable mirror change significantly owing to large vibrations or the generating of heat to a large extent, a value of Pi may be defined as being around 0.5, and thereby the number of individuals which are generated randomly may be increased.

Furthermore, according to each of the aforementioned embodiments, a genetic algorithm is used for the method for changing register values from initialized values of the registers group 2RG. With regard to a evaluation function F indicating how close to a ideal solution a fitness value in a genetic algorithm, i.e, a register value is, if the number of local optimal solutions is small (in general, a single-digit number), what is referred to as simulated annealing can be used instead of a genetic algorithm in the adjusting method, the adjusting device and the processing program according to the aforementioned embodiments. In addition, even if the number of local optimal solutions is large, a search for optimal solutions, by extension an adjustment can be made faster by simulated annealing, although performance which is achieved as a result of the adjustment becomes lower compared to the genetic algorithm.

For details of simulated annealing, please refer to Aarts, E. and Korst, J. (1989), *Simulated Annealing and Boltzmann Machines.* John Wiley & Sons. Simulated annealing is a kind of hill-climbing algorithm. By use of a control parameter which is referred to as a temperature, a contrivance for inhibiting a search from getting stuck on local optimal solutions is introduced.

Detailed procedures to be used when an optimal solution of an evaluation function F is found by use of simulated annealing have been disclosed by the present inventor in Japanese Patent Laid-Open Official Gazette No. 2000-156627, and have been publicly known. Here, a description will be omitted.

Descriptions have been provided above citing examples shown by the figures. The present invention is not intended to be limited to the aforementioned examples, and includes even another constitution which a person having ordinary skill in the art can easily modify within the scope of the invention being indicated by the appended claims. For example, the present invention can be adapted for any one of the whole, a part and a plurality of parts of a deformable mirror, and the adaptation is not intended to be restrained by the size of a deformable mirror.

INDUSTRIAL APPLICATION

According to the present invention, operation amounts of a plurality of deforming means, which change the shapes of a plurality of deforming portions concerning a deformable mirror including a mirror surface in which changes in shape of the plurality of deforming portions have influence on one another, can be automatically adjusted in order to optimize the reflected light without depending on a skilled person in a relatively short time, and deterioration in a reflection state of the deformable mirror attributable to variation with time and the like can be reconditioned automatically.

**Claims**

1. An adjusting method of a deformable mirror, wherein, when amounts of change in shape of a plurality of deforming portions of the deformable mirror are adjusted, the deformable mirror including: a mirror surface in which the plurality of deforming portions are set and changes in shape of the deforming portions have influence on one another; and a plurality of deforming means for changing shapes of the plurality of deforming portions of the mirror surface respectively in response to control signals from the outside, and the deformable mirror changing a three-dimensional shape of the mirror surface in a segment-to-segment basis in a way that the deforming means change the shapes of the deforming portions of the mirror surface, the adjusting method comprising:

detecting reflected light, which has been outputted from a predetermined light source, and which has been reflected by the mirror surface, at a predetermined position;
evaluating the reflected light detected in accordance with a predetermined criteria; and
adjusting the amounts of change in shape of the plurality of deforming portions by supplying the control signals to the plurality of deforming means in order to optimize the reflected light by use of a genetic algorithm, based on a result of the evaluating of the reflected light.

2. The adjusting method of the deformable mirror according to claim 1, wherein the evaluating in accordance with the predetermined criteria is made by an evaluation function which is constituted of a weighted sum of a plurality of evaluation values of the detected, reflected light.

3. The adjusting method of a deformable mirror according to claim 1 or 2, wherein the evaluating in accordance with the predetermined criteria is made by an evaluation function which is constituted by using a radius of distribution which is obtained when a power distribution of the reflected light is cut through at a predetermined power level, as evaluation values of the detected and reflected light.

4. The adjusting method of a deformable mirror according to claim 1 or 2, wherein the evaluating in accordance with the predetermined criteria is made by an evaluation function which is constituted by using a power variation in a power distribution of the reflected light as an evaluation value of the detected, reflected light.

5. The adjusting method of a deformable mirror according to claim 1, wherein the evaluating in accordance with the predetermined criteria is made by an evaluation function which is constituted by using a minor axis of an ellipse, which is approximated to a shape of a distribution which is obtained when a power distribution of the reflected light is cut through at a predetermined power level, as evaluation values of the detected, reflected light.

6. The adjusting method of a deformable mirror according to any one of claims 1 to 5, wherein simulated annealing is used instead of the genetic algorithm.

7. The adjusting method of a deformable mirror according to any one of claims 1 to 6, wherein the reflected light which is reflected by the mirror surface of the deformable mirror and a parabolic mirror sequentially is detected.

8. The adjusting method of a deformable mirror according to any one of claims 1 to 6, wherein the reflected light which is reflected by the mirror surfaces of the plurality of deformable mirrors sequentially is detected.

9. An adjusting device of a deformable mirror, which adjusts amounts of change in shape of a plurality of deforming portions in the deformable mirror, the deformable mirror including: a mirror surface in which the plurality of deforming portions are set and changes in shape of the deforming portions have influence on one another; and a plurality of deforming means for changing shapes of the plurality of deforming portions of the mirror surface respectively in response to control signals from the outside, and the deforming mirror changing a three-dimensional shape of the mirror surface in a segment-to-segment basis in a way that the deforming means change the shapes of the deforming portions of the mirror surface, the adjusting device comprising:

reflected light detecting means for detecting reflected light which has been outputted from a predetermined light source, and which has been reflected by the mirror surface, at a predetermined position;
reflected light evaluating means for evaluating the reflected light detected in accordance with predetermined criteria; and
control signal outputting means for supplying control signals to the plurality of deforming means in order to optimize the reflected light by use of a genetic algorithm, based on a result of the evaluating of the reflected light.

10. The adjusting device of a deformable mirror according to claim 9, wherein simulated annealing is used instead of the genetic algorithm.

**11.** The adjusting device of a deformable mirror according to claim 9 or 10, wherein the reflected light detecting means detects the reflected light which is reflected by the mirror surface of the deformable mirror and a parabolic mirror sequentially.

**12.** The adjusting device of a deformable mirror according to claim 9 or 10, wherein the reflected light detecting means detects the reflected light which is reflected by the mirror surfaces of the plurality of deformable mirrors sequentially.

**13.** A processing program for performing the adjusting method of the deformable mirror according to any one of claims 1 to 5, **characterized by** causing a computer to execute the steps of:

evaluating the detected, reflected light in accordance with the predetermined criteria; and
adjusting amounts of change in shape of the plurality of deforming portions by providing control signals to the plurality of deforming means to optimize the reflected light, based on a result of evaluating the reflected light, by use of a genetic algorithm.

**14.** The processing program according to claim 13, wherein simulated annealing is used instead of the genetic algorithm.

FIG. 1

# FIG. 2

# FIG. 3

```
              ( Start )

          [ Set initial values ]  ～ S1

          [ Generate inputted light ]  ～ S2

          [ Observe by observation unit ]  ～ S3

   S4 ⟨ Whether or not within          YES ──────┐
         tolerance ? ⟩                           │
              │ NO                                ▼
          [ Change register values ]  ～ S5    ( End )

          [ Wait for a certain period ]  ～ S6

   NO ⟨ Whether or not satisfy    ～ S7
         termination condition ? ⟩
              │ YES
          [ Process defective ]  ～ S8

              ( End )
```

# *FIG. 4*

```
┌─────────────────────────────┐
│   Set virtual organisms     │ ─ S11
│      and environment        │
└─────────────────────────────┘
              │
              ▼
        (    Start    ) ─ S12
              │
              ▼
┌─────────────────────────────┐
│  Generate initial population │ ─ S13
└─────────────────────────────┘
              │
              ▼
┌─────────────────────────────┐
│  Calculate fitness value of │ ─ S14
│      each individual        │
└─────────────────────────────┘
              │
              ▼
┌─────────────────────────────┐
│     Perform selection       │ ─ S15
└─────────────────────────────┘
              │
              ▼
┌─────────────────────────────┐
│     Perform crossover       │ ─ S16
└─────────────────────────────┘
              │
              ▼
┌─────────────────────────────┐
│     Perform mutation        │ ─ S17
└─────────────────────────────┘
              │
              ▼
       Whether or not satisfy        ─ S18
   No  criteria for evaluation of
       population of organisms ?
              │
             YES
              │
              ▼
        (    End    ) ─ S19
```

# FIG. 5

# FIG. 6

| +4. 32 | −15. 67 | +3. 14 | ......... | −9. 71 | *Chromosome* |

2DAC

+4. 32    −15. 67    +3. 14    ..........    −9. 71    *Register 2R*

*AM*

*103*    *103*    *103*    *103*

EP 1 482 347 A1

# FIG. 7

```
        ┌─────────────────────┐
        │    Start crossover  │
        │     operation       │
        └─────────────────────┘
                  │
                  ▼
        ┌─────────────────────────────┐
        │ Select parent individual 3  │
        │ out of population randomly  │─── S21
        └─────────────────────────────┘
                  │
                  ▼
        ┌──────────────────────────────────┐
        │ Calculate middle point C of adjustment │
        │ signal values of 1 and 2 which have   │─── S22
        │ been selected by selection operation  │
        └──────────────────────────────────┘
                  │
                  ▼
        ┌──────────────────────────────────┐
        │ Generate child individuals 1 and 2 in │
        │ accordance with normal distribution   │─── S23
        │ set around middle point C             │
        └──────────────────────────────────┘
                  │
                  ▼
        ┌─────────────────────┐
        │  Terminate crossover │
        │     operation       │
        └─────────────────────┘
```

# FIG. 8

Parent individual 2

Parent individual 3

$X_2$

$\sigma_\xi$

$\sigma_\eta$

$D$

$X_c$

$c$

$d$

$X_1$

Parent individual 1

Normal distribution

$\sigma_\xi = ad$

$\sigma_\eta = bD$

$\beta$

$0$

$\alpha$

# FIG. 9

Ch5 | +2.31  −6.45  −3.28  +3.55  −4.12 |

Mutation ⇓

Normal random numbers $N(0, \sigma^2)$

+ | +0.12  −0.05  +0.02  −0.07  −0.09 |

Ch6 | +2.45  −6.50  −3.26  +3.48  −4.21 |

# FIG. 10

Start replacement
operation

Select two epistatic individuals A and B
having higher fitness values out of parent
individuals 1 and 2 and child individuals
1 and 2 — S25

Replace parent individuals 1 and 2
with individuals A and B — S26

Terminate replacement

EP 1 482 347 A1

*FIG. 11*

Continued from
step S2

Select individual — S31

Crossover — S32

Mutation — S33

Change register values — S34

Observe by observation unit — S35

Calculate fitness value — S36

Change register values — S37

Observe by observation unit — S38

Calculate fitness value — S39

Replacement — S40

Continued to step S6

Calculate fitness value of each of 2 child individuals generated

30

## FIG. 12

## FIG. 13

Cross sectional value view at $Y = Y_G$

# FIG. 14

Relative strength (%)

80

50

10

6500μm          0          6500μm

Distance from center position of work surface

# FIG. 15

Relative strength (%)

80

50

5

6500μm          0          6500μm

Distance from center position of work surface

FIG. 16

## FIG. 17

## FIG. 18

## FIG. 19

## FIG. 20

Distance from center position of work surface

# FIG. 21

FIG. 22

FIG. 23

# FIG. 24

# FIG. 25

# FIG. 26

EP 1 482 347 A1

# FIG. 27

42

# FIG. 28

# FIG. 29

# FIG. 30

Parent 1

Parent 2

Child 1′

Child 2′

# FIG. 31

```
        ┌─────────────────────┐
        │   Start crossover   │
        │     operation       │
        └─────────────────────┘
                   │
                   ▼
     ┌────────────────────────────┐
     │   Select bisectioning      │ ─── S27
     │   straight line randomly   │
     └────────────────────────────┘
                   │
                   ▼
     ┌────────────────────────────┐
     │  Bisection parent          │
     │  individuals 1 and 2 which │ ─── S28
     │  have been selected by     │
     │  selection operation       │
     └────────────────────────────┘
                   │
                   ▼
     ┌────────────────────────────┐
     │ Generate child individuals │
     │ 1´ and 2´ by replacing     │ ─── S29
     │ register values            │
     │ corresponding              │
     │ to separated electrodes    │
     └────────────────────────────┘
                   │
                   ▼
        ┌─────────────────────┐
        │ Terminate crossover │
        │     operation       │
        └─────────────────────┘
```

# FIG. 32

# FIG. 33

Approximation of distribution shape by ellipse

Plane cut through at radius r′

## FIG. 34A

Distance from center of ellipse in direction of minor axis

## FIG. 34B

Distance from center of ellipse in direction of major axis

# FIG. 35

## INTERNATIONAL SEARCH REPORT

| International application No. |
| --- |
| PCT/JP03/01139 |

A. CLASSIFICATION OF SUBJECT MATTER
  Int.Cl$^7$  G02B26/06, G02B26/08, G02B7/18

According to International Patent Classification (IPC) or to both national classification and IPC

B. FIELDS SEARCHED

Minimum documentation searched (classification system followed by classification symbols)
  Int.Cl$^7$  G02B26/06, G02B26/08, G02B7/18

Documentation searched other than minimum documentation to the extent that such documents are included in the fields searched
  Jitsuyo Shinan Koho          1922–1996    Toroku Jitsuyo Shinan Koho    1994–2003
  Kokai Jitsuyo Shinan Koho    1971–2003    Jitsuyo Shinan Toroku Koho    1996–2003

Electronic data base consulted during the international search (name of data base and, where practicable, search terms used)
  JICST FILE(JOIS)

C. DOCUMENTS CONSIDERED TO BE RELEVANT

| Category* | Citation of document, with indication, where appropriate, of the relevant passages | Relevant to claim No. |
| --- | --- | --- |
| X | JP 2001-196669 A  (Director General of National Institute of Advanced Industrial Science and | 1,2,6,9,10, 13,14 |
| Y | Technology), 19 July, 2001 (19.07.01), Par. Nos. [0075] to [0082], [0101] to [0129], [0180], [0194] to [0216] (Family: none) | 3-5,7,8,11, 12 |
| Y | JP 2001-242414 A  (Minolta Co., Ltd.), 07 September, 2001 (07.09.01), Par. No. [0020] (Family: none) | 4 |
| X | K. NEMOTO et al., Optimum control of the laser beam intensity profile with a deformable mirror, APPLIED OPTICS, 20 October, 1997 (20.10.97), Vol.36, No.30, pages 7689 to 7695 | 1,2,3,5,9, 13,14 |

| ☒ Further documents are listed in the continuation of Box C. | ☐ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 13 March, 2003 (13.03.03) | 25 March, 2003 (25.03.03) |

| Name and mailing address of the ISA/ | Authorized officer |
| --- | --- |
| Japanese Patent Office | |
| Facsimile No. | Telephone No. |

Form PCT/ISA/210 (second sheet) (July 1998)

**INTERNATIONAL SEARCH REPORT**

International application No.

PCT/JP03/01139

C (Continuation).   DOCUMENTS CONSIDERED TO BE RELEVANT

| Category* | Citation of document, with indication, where appropriate, of the relevant passages | Relevant to claim No. |
|---|---|---|
| Y | O. ALBERT, et al., Smart microscope: an adaptive optics learning system for aberration correction in multiphoton confocal microscopy, OPTICS LETTERS, 01 January, 2000 (01.01.00), Vol.25, No.1, pages 52 to 54 | 3-5,7,8,11, 12 |

Form PCT/ISA/210 (continuation of second sheet) (July 1998)